Europäisches Patentamt

European Patent Office

Office européen des brevets

(19)

(11) **EP 0 934 371 B1**

(12) **FASCICULE DE BREVET EUROPEEN**

(45) Date de publication et mention
de la délivrance du brevet:
**13.10.2004 Bulletin 2004/42**

(21) Numéro de dépôt: **97909088.3**

(22) Date de dépôt: **24.10.1997**

(51) Int Cl.7: **C09D 167/07**, C09D 133/06,
C08L 67/07, C08L 33/06

(86) Numéro de dépôt international:
**PCT/BE1997/000125**

(87) Numéro de publication internationale:
**WO 1998/018874 (07.05.1998 Gazette 1998/18)**

(54) **COMPOSITIONS EN POUDRE A BASE DE POLYESTERS SEMI-CRISTALLINS ET DE COPOLYMERES ACRYLIQUES, CONTENANT DES GROUPES ETHYLENIQUEMENT INSATURES**

PULVERZUSAMMENSETZUNGEN AUF BASIS VON TEILKRISTALLINEN POLYESTERN UND ACRYLPOLYMEREN MIT ÄTHYLENISCH UNGESÄTTIGTEN GRUPPEN

POWDER COMPOSITIONS WITH SEMICRYSTALLINE POLYESTER AND ACRYLIC COPOLYMER BASE CONTAINING ETHYLENICALLY UNSATURATE GROUPS

(84) Etats contractants désignés:
**AT BE CH DE DK ES FI FR GB GR IE IT LI LU MC NL PT SE**

(30) Priorité: **25.10.1996 BE 9600906**

(43) Date de publication de la demande:
**11.08.1999 Bulletin 1999/32**

(73) Titulaire: **UCB, S.A.**
**1070 Bruxelles (BE)**

(72) Inventeurs:
• **MOENS, Luc**
**B-1640 Sint-Genesius-Rode (BE)**

• **LOUTZ, Jean-Marie**
**B-1180 Bruxelles (BE)**
• **MAETENS, Daniel**
**B-1080 Bruxelles (BE)**
• **LOOSEN, Patrick**
**B-2870 Ruisbrooek (BE)**
• **VAN KERCKHOVE, Marc**
**B-1457 Nil-Saint-Vincent (BE)**

(56) Documents cités:
**EP-A- 0 624 609          WO-A-94/01505**
**WO-A-96/00751**

**Description**

La présente invention se rapporte à de nouvelles compositions en poudre durcissables par rayonnement comprenant un mélange d'au moins un polyester semi-cristallin contenant des groupes méthacryloyle terminaux et d'au moins un copolymère acrylique contenant des groupes éthyléniquement insaturés, de même qu'à la préparation et aux utilisations desdites compositions.

Plus particulièrement, la présente invention concerne des compositions en poudre durcissables par irradiation ultraviolette ou par faisceaux d'électrons accélérés, dont le liant est constitué par un mélange d'au moins un polyester semi-cristallin contenant des groupes méthacryloyle terminaux et d'au moins un copolymere acrylique contenant des groupes éthyléniquement insaturés, et de préférence des groupes acryloyle ou méthacryloyle, et qui se prêtent à la production d'enduits de peinture et de vernis présentant un ensemble unique de propriétés, entre autres une excellente dureté et flexibilité, une remarquable résistance aux solvants, en même temps qu'une bonne stabilité au stockage.

Les compositions thermodurcissables en poudre sont bien connues dans l'état de la technique et sont largement utilisées comme peintures et vernis pour le revêtement d'objets les plus divers. Les avantages de ces poudres sont nombreux; d'une part les problèmes dus aux solvants sont complètement supprimés, d'autre part les poudres sont utilisées à 100%, dans la mesure où seule la poudre en contact direct avec le substrat est retenue par celui-ci, l'excès de poudre étant, en principe, intégralement récupérable et réutilisable. C'est pourquoi ces compositions en poudre sont préférées par rapport aux compositions de revêtement se présentant sous la forme de solutions dans un solvant organique.

Les compositions thermodurcissables en poudre ont déjà trouvé un large débouché dans l'enduction des appareils électroménagers, des accessoires de l'industrie automobile, du mobilier métallique, etc. Elles contiennent généralement des composés organiques thermodurcissables constituant le liant de la peinture, des charges, des pigments, des catalyseurs et des additifs divers pour adapter leur comportement à leur utilisation.

Il existe différents types de compositions thermodurcissables en poudre. Les compositions les plus connues contiennent comme liant, des polyesters contenant des groupes carboxyle ou des groupes hydroxyle, des copolymères acryliques porteurs de groupes glycidyle, carboxyle ou hydroxyle, etc., en mélange avec des agents de réticulation contenant des groupes fonctionnels capables de réagir avec les groupes fonctionnels des polymères précités.

Les copolymères acryliques contenant des groupes glycidyle, carboxyle ou hydroxyle utilisés dans les compositions thermodurcissables en poudre sont typiquement constitués d acrylates et de méthacrylates d'alkyle, de monomères vinyliques ou allyliques, d'acrylamides, d acides acrylique ou méthacrylique, d'acrylates et de méthacrylates d'hydroxyalkyle ou de glycidyle. Ces copolymères acryliques présentent, des températures de transition vitreuse, de l'ordre de 45 à 85°C; il est nécessaire d'utiliser des copolymères acryliques ayant de telles températures de transition vitreuses, car pour des températures plus basses, les compositions ne sont pas stables et se réagglomèrent au cours du stockage.

La viscosité à la fusion des copolymères acryliques est également élevée, de l'ordre de 10 à 10.000 mPa.s à 200°C (méthode cône/plateau). Cette viscosité élevée des copolymères acryliques entraîne une série de problèmes. En effet, lors de la fusion des compositions qui les contiennent, pour la préparation de revêtements, l'écoulement de l'enduit est freiné par la valeur élevée de la viscosité.

Enfin un autre problème réside dans la température de cuisson des compositions thermodurcissables contenant des copolymères acryliques porteurs de groupes glycidyle, carboxyle ou hydroxyle. En effet, même en choisissant judicieusement l'agent de réticulation et un catalyseur approprié pour la réaction entre le groupe fonctionnel du copolymère acrylique et celui de l'agent de réticulation, il n'est jamais recommandé d'effectuer la cuisson de telles compositions à des températures inférieures à 140°C, pendant une durée d'au moins 10 minutes. Si l'on applique des températures de cuisson plus basses, les revêtements obtenus présentent généralement un mauvais aspect de surface. Il serait donc souhaitable de trouver un moyen d'abaisser ces température et durée de cuisson.

Par ailleurs, même dans des conditions idéales, les revêtements obtenus à partir de compositions thermodurcissables contenant des copolymères acryliques présentent toujours un manque de flexibilité et de résistance à l'impact.

Pour résoudre les problèmes de flexibilité et de résistance à l'impact, on a proposé plus récemment d'ajouter un polyester semi-cristallin contenant des groupes carboxyle ou des groupes hydroxyle aux compositions thermodurcissables en poudre dont il est question ici, tel que décrit dans la demande de brevet WO 94/01505.

Cependant, en dépit de leurs propriétés avantageuses, les polyesters semi-cristallins de l'état de la technique présentent aussi des inconvénients importants à l'échelle technique, même si ces polyesters semi-cristallins sont utilisés comme supplément pour modifier les copolymères acryliques ou les polyesters classiques disponibles dans le commerce.

En effet, les enduits obtenus à partir de telles compositions contenant des polyesters semi-cristallins présentent une dureté de surface réduite (dureté au crayon HB).

Par ailleurs, pour qu'ils soient durcissables à une température modérée, au moins 140°C en général, les copolymères acryliques requièrent la présence d'un agent de réticulation et d'un catalyseur. Or, pour la préparation de la poudre, il faut fondre le copolymère acrylique avec l'agent de réticulation, le catalyseur et les autres additifs dans une extrudeuse, à une température proche de la température de réticulation du système. Il s'ensuit que, sans précautions particulières, il se produit déjà lors de la préparation de la poudre une réticulation prématurée indésirable du liant par réaction entre le copolymère acrylique et l'agent de réticulation. Cette réticulation prématurée du liant peut, sans précautions particulières, causer le blocage de l'extrudeuse ce qui présente un danger réel non négligeable. Une poudre ainsi préparée produit des revêtements défectueux, à cause de la présence de particules gélifiées. Par ailleurs, au moment où le film fondu doit s'étaler sur le substrat à revêtir, la présence d'une quantité trop importante de catalyseur de réticulation provoque une réticulation prématurée, qui entraîne une élévation rapide de la viscosité de l'enduit. Cette élévation de la viscosité empêche un bon étalement, ce qui conduit à des malformations du revêtement obtenu, telles que peau d'orange, etc.

Pour éviter ces inconvénients, et dans le but d'abaisser encore les température et durée de cuisson de compositions durcissables en poudre contenant des copolymères acryliques, on a récemment tenté d'utiliser des compositions durcissables par rayonnement ultraviolet ou par des faisceaux d'électrons. Dans ce but, on a utilisé des copolymères acryliques insaturés par exemple. C'est ainsi que dans la demande de brevet WO 93/25596 on a obtenu un bon étalement de l'enduit et des revêtements ayant une bonne flexibilité, grâce à une faible viscosité et à une basse température de transition vitreuse, en réalisant la fusion de la poudre entre 100 et 150°C pendant une durée de 10 à 30 minutes. Toutefois cette basse température de transition vitreuse est la cause d'un manque de stabilité au stockage et d'une réagglomération de la poudre après une durée prolongée de stockage à 40°C.

Par voie de conséquence, il serait très souhaitable de pouvoir disposer de nouveaux liants pour la fabrication de compositions en poudre qui peuvent être durcis par irradiation ultraviolette ou par faisceaux d'électrons accélérés et qui ne présentent plus les inconvénients rappelés plus haut, compte tenu du fait que le mécanisme de réticulation n'est plus concomitant à celui de fusion de la poudre. De tels liants devraient permettre de préparer des compositions en poudre durcissables à des températures peu élevées, par exemple 100 à 150°C, fusibles rapidement, comme pendant des durées courtes de 1 à 5 minutes, avant irradiation. En outre ces compositions devraient à la fois présenter une bonne stabilité au stockage, et assurer la production d'enduits de peinture ou de vernis possédant d'excellentes propriétés physiques, en particulier en ce qui concerne la fluidité à l'état fondu, l'aspect de surface, la dureté superficielle, la flexibilité, et la résistance aux solvants.

On a maintenant fait la découverte surprenante que cet objectif est atteint lorsque, pour la préparation des compositions en poudre durcissables par rayonnement UV ou faisceaux d'électrons accélérés, on utilise comme liant un mélange de polyesters semi-cristallins contenant des groupes méthacryloyle terminaux et de copolymères acryliques contenant des groupes éthyléniquement insaturés, de préférence des groupes acryloyle ou méthacryloyle. Les polyesters sont préparés à partir d'un méthacrylate de glycidyle et de polyesters semi-cristallins, eux-mêmes préparés à partir de constituants acide et alcoolique déterminés.

La présente invention a donc pour objet de nouvelles compositions en poudre durcissables par rayonnement UV ou faisceaux d'électrons accélérés comprenant un mélange d'au moins un polyester semi-cristallin contenant des groupes méthacryloyle terminaux et au moins un copolymère acrylique contenant des groupes éthyléniquement insaturés, ces polyesters comprenant les produits de réaction d'un méthacrylate de glycidyle et d'un polyester semi-cristallin contenant des groupes carboxyle terminaux, ce dernier étant choisi parmi

(a) un polyester qui est le produit de réaction de

(1) un constituant acide qui contient (a.1.1) 85 à 100 moles % d'acide téréphtalique, d'acide 1,4-cyclohexanedicarboxyique ou d'acide 1,12-dodecanedioïque et (a.1.2) 0 à 15 moles % d'au moins un autre acide di- ou polycarboxylique aliphatique, cycloaliphatique ou aromatique ayant de 4 à 14 atomes de carbone; avec,
(2) un constituant alcoolique qui contient (a.2.1) 85 à 100 moles % d'un diol aliphatique saturé à chaîne droite ayant de 2 à 12 atomes de carbone et (a.2.2) 0 à 15 moles % d'au moins un autre di- ou polyol aliphatique ou cycloaliphatique ayant de 2 à 15 atomes de carbone; et

(b) un polyester qui est le produit de réaction de

(1) un constituant acide qui contient (b.1.1) 85 à 100 moles % d'un acide dicarboxylique aliphatique saturé à chaîne droite ayant de 4 à 14 atomes de carbone et (b.1.2) 0 à 15 moles % d'au moins un autre acide di- ou polycarboxylique aliphatique, cycloaliphatique ou aromatique ayant de 4 à 14 atomes de carbone; avec,
(2) un constituant alcoolique qui contient (b.2.1) 85 à 100 moles % de 1,4-cyclohexanediol ou de 1,4-cyclohexanediméthanol et (b.2.2) 0 à 15 moles % d'au moins un autre di- ou polyol aliphatique ou cycloaliphatique ayant de 2 à 15 atomes de carbone;

et ledit copolymère acrylique contenant des groupes éthyténiquement insaturés étant constitué du
(c) produit de réaction de

(1) un copolymère acrylique porteur de groupes fonctionnels contenant (c.1.1) 40 à 95 moles% d'au moins un monomère contenant le groupe acryloyle ou méthacryloyle, (c.1.2) 5 à 60 moles% d'au moins un autre monomère éthyléniquement insaturé et (c.1.3) 5 à 60 moles%, calculé sur le total des quantités de (c.1.1) et (c.1.2), d'un autre monomère éthyléniquement insaturé porteur d'un groupe fonctionnel capable de subir une réaction d'addition ou de condensation, et choisi parmi les groupes époxy, carboxyle, hydroxyle ou isocyanato, avec

(2) un monomère (c.2) contenant un groupe éthyléniquement insaturé et un groupe fonctionnel capable de subir une réaction d'addition ou de condensation avec le groupe fonctionnel du monomère (c.1.3) incorporé dans le copolymère acrylique (1).

Les polyesters semi-cristallins contenant des groupes méthacryloyle terminaux incorporés dans les compositions conformes à la présente invention présentent le plus souvent un degré d'insaturation terminale de 0,17 à 2,0, de préférence, de 0,35 à 1,50 milliéquivalents de doubles liaisons par gramme de polyester.

En outre, ces polyesters semi-cristallins contenant des groupes méthacryloyle terminaux présentent de préférence les caractéristiques suivantes:

- un poids moléculaire moyen en nombre compris entre 1.000 et 20.000, de préférence entre 1.400 et 8.500, mesuré par chromatographie par perméation de gel (ou CPG),
- un point de fusion bien défini de 60 à 150°C, déterminé par calorimétrie à balayage différentiel (ou DSC) selon la norme ASTM D 3418-82,
- une viscosité inférieure ou égale à 10.000 mPa.s à 175°C, mesurée par la méthode cône/plateau (viscosité ICI), selon la norme ASTM D 4287-88.

Le constituant acide du polyester semi-cristallin (a) contenant des groupes carboxyle terminaux contient 85 à 100 moles % d'acide téréphtalique, d'acide 1,4-cyclohexanedicarboxylique ou d'acide 1,12-dodécanedioïque et éventuellement jusqu'à 15 moles % d'un ou plusieurs autres acides di- ou polycarboxyliques aliphatiques, cycloaliphatiques ou aromatiques ayant de 4 à 14 atomes de carbone, tels que l'acide maléique, l'acide fumarique, l'acide isophtalique, l'acide phtalique, l'acide téréphtalique, l'acide 1,2-cyclohexanedicarboxylique, l'acide 1,3-cyclohexanedicarboxylique, l'acide 1,4-cyclohexanedicarboxylique, l'acide succinique, l'acide glutarique, l'acide adipique, l'acide pimélique, l'acide subérique, l'acide azélaïque et l'acide sébacique. Ces acides peuvent être utilisés sous forme de l'acide libre ou de leurs dérivés fonctionnels, en particulier sous la forme de l'anhydride. L'utilisation d'un acide polycarboxylique (ou son anhydride) comportant au moins trois groupes carboxyle, par exemple l'acide (ou l'anhydride) trimellitique ou l'acide pyromellitique, permet la préparation de polyesters ramifiés. En outre, ces acides di- ou polycarboxyliques peuvent être utilisés seuls ou en mélange, mais de préférence, on les utilise seuls.

Le constituant alcoolique du polyester semi-cristallin (a) contenant des groupes carboxyle terminaux contient 85 à 100 moles % d'un diol aliphatique saturé à chaîne droite ayant de 2 à 12 atomes de carbone. Des exemples de diols qui peuvent être utilisés sont l'éthylène glycol, le 1,4-butanediol, le 1,5-pentanediol et le 1,6-hexanediol. Le constituant alcoolique du polyester semi-cristallin (a) contenant des groupes carboxyle terminaux peut contenir également jusqu'à 15 moles % d'un ou plusieurs autres di- ou polyols aliphatiques ou cycloaliphatiques ayant de 2 à 15 atomes de carbone, comme par exemple le 1,4-cyclohexanediol, le 1,4-cyclohexanediméthanol ou le bisphénol A hydrogéné. Pour la préparation de polyesters ramifiés, on utilise avantageusement des polyols trihydroxylés ou tétrahydroxylés, tels que le triméthylolpropane, le ditriméthylolpropane, le triméthyloléthane ou le pentaérythritol et leurs mélanges.

Le constituant acide du polyester semi-cristallin (b) contenant des groupes carboxyle terminaux contient 85 à 100 moles % d'un acide dicarboxylique aliphatique saturé à chaîne droite ayant de 4 à 14 atomes de carbone. Des exemples des acides qui peuvent être utilisés sont l'acide succinique, l'acide glutarique, l'acide adipique, l'acide pimélique, l'acide subérique, l'acide azélaïque, l'acide sébacique, l'acide 1,12-dodécanedioïque, etc. Ces acides peuvent être utilisés sous forme d'acides libres ou de leurs dérivés fonctionnels, en particulier sous la forme d'anhydrides. En outre, ces acides peuvent être utilisés seuls ou en mélange, mais de préférence on les utilise seuls.

Le constituant acide du polyester semi-cristallin (b) contenant des groupes carboxyle terminaux peut contenir également jusqu'à 15 moles % d'un ou plusieurs autres acides di- ou polycarboxyliques aliphatiques, cycloaliphatiques ou aromatiques ayant de 4 à 14 atomes de carbone, tels que l'acide maléique, l'acide fumarique, l'acide téréphtalique, l'acide phtalique, l'acide isophtalique, l'acide 1,2-cyclohexanedicarboxylique, l'acide 1,3-cyclohexanedicarboxylique, l'acide 1,4-cyclohexanedicarboxylique. L'utilisation d'un acide polycarboxylique (ou son anhydride) comportant au moins trois groupes carboxyle, par exemple l'acide (ou l'anhydride) trimellitique ou l'acide pyromellitique, permet la préparation de polyesters ramifiés. En outre, ces acides di- ou polycarboxyliques peuvent être utilisés seuls ou en mélange, mais de préférence, on les utilise seuls.

Le constituant alcoolique du polyester semi-cristallin (b) contenant des groupes carboxyle terminaux contient 85 à 100 moles % de 1,4-cyclohexanediol ou de 1,4-cyclohexanediméthanol. Le constituant alcoolique du polyester semi-cristallin (b) contenant des groupes carboxyle terminaux peut contenir également jusqu'à 15 moles % d'un ou plusieurs autres di- ou polyols aliphatiques ou cycloaliphatiques tels que l'éthyléne glycol, le propyléne glycol, le 1,4-butanediol, le 1,5-pentanediol, le 1,6-hexanediol, le 1,4-cyclohexanediol, le 1,4-cyclohexanediméthanol et le bisphénol A hydrogéné. Pour la préparation de polyesters ramifiés, on utilise avantageusement des polyols trihydroxylés ou tétrahydroxylés, tels que le triméthylolpropane, le ditriméthylolpropane, le triméthyloléthane ou le pentaérythritol et leurs mélanges.

Les copolymères acryliques contenant des groupes éthyléniquement insaturés, de préférence des groupes acryloyle ou méthacryloyle, incorporés dans les compositions conformes à la présente invention présentent le plus souvent un degré d'insaturation de 0,35 à 3,5, de préférence, de 0,5 à 2,5 milliéquivalents de doubles liaisons par gramme de copolymère acrylique.

En outre, ces copolymères acryliques présentent de préférence les caractéristiques suivantes:

- un poids moléculaire moyen en nombre compris entre 1.000 et 8.000, de préférence entre 2.000 et 6.000, mesuré par chromatographie par perméation de gel (ou CPG),
- une température de transition vitreuse allant de 45 à 100°C,
- une viscosité mesurée par la méthode cône/plateau (viscosité ICI), selon la norme ASTM D 4287-88, à 125°C allant de 10.000 à 100.000 mPa.s.

Le copolymère acrylique contenant des groupes éthyléniquement insaturés est préparé en deux étapes, la première étant une polymérisation radicalaire.

Dans la première étape, on prépare un copolymère acrylique porteur de groupes fonctionnels par copolymérisation radicalaire de trois types de monomères différents (c.1.1), (c.1.2) et (c.1.3).

Le monomère (c.1.1) contient le groupe acryloyle ou méthacryloyle, et est choisi parmi des monomères tels que les acrylates ou méthacrylates de méthyle, d'éthyle, de propyle, de n-butyle, d'isobutyle, de tert.-butyle, de 2-éthylhexyle, de stéaryle, de tridécyle, de cyclohexyle, de benzyle, de phényle, de diméthylaminoéthyle, de diéthylaminoéthyle, d'isobornyle, de polysiloxane, de caprolactone, etc. Ces monomères peuvent être utilisés seuls, mais ils sont le plus souvent utilisés en mélange. On en introduit 40 à 95 moles% dans le copolymère acrylique, calculé sur l'ensemble des monomères (c.1.1) et (c.1.2).

Le monomère (c.1.2) est un composé éthyléniquement insaturé, différent du monomère (c.1.1), et est choisi parmi le styrène, l'$\alpha$-méthylstrène, le vinyltoluène, l'acrylonitrile, le méthacrylonitrile, l'acétate ou le propionate de vinyle, l'acrylamide, le méthacrylamide, le méthylolméthacrylamide, le chlorure de vinyle, l'éthylène, le propylène, les oléfines ayant de 4 à 20 atomes de carbone, etc. Ces monomères sont utilisés seuls ou en mélange, en une quantité de 5 à 60 moles% par rapport à l'ensemble des monomères (c.1.1) et (c.1.2).

Le monomère (c.1.3) est un composé éthyléniquement insaturé, différent des monomères (c.1.1) et (c.1.2), et il porte un groupe fonctionnel capable de subir une réaction d'addition ou de condensation. Parmi ces groupes fonctionnels, on choisit le groupe glycidyle, carboxyle, hydroxyle ou isocyanato. Des monomères porteurs de tels groupes fonctionnels sont par exemple l'acrylate ou le méthacrylate de glycidyle, l'acide acrylique ou méthacrylique, l'acrylate ou méthacrylate d'hydroxyéthyle et le méthacrylate de 2-isocyanatoéthyle ou l'isocyanate de méthacryloyle, le 1-(1-isocyanato-1-méthyléthyl)-3-(1-méthyléthènyl)-benzène, l'anhydride maléique ou encore l'anhydride tétrahydrophtalique. On utilise 5 à 60 moles% du monomère (c.1.3) par rapport à l'ensemble des monomères (c.1.1) et (c.1.2).

Le monomère (c.1.3) peut être remplacé totalement, mais de préférence partiellement, par des initiateurs de polymérisation porteur d'un des groupes fonctionnels précités, par exemple l'acide 4,4'-azobis-(2-cyanovalérique) qui apportera un groupe carboxyle ou le 2,2'-azobis-[2-méthyle-N-(2-hydroxyéthyle)-propionamide] qui apportera un groupe hydroxyle dans la chaîne du copolymère acrylique qui portera un de ces groupes fonctionnels. De même, des agents de transfert de chaîne pourront jouer le même rôle, comme l'acide 3-mercaptopropionique ou le 3-mercapto-1-propanol.

Dans la deuxième étape de préparation du copolymère acrylique contenant des groupes éthyléniquement insaturés, de préférence les groupes acryloyle ou méthacryloyle, on fait réagir le copolymère acrylique porteur des groupes fonctionnels apportés par le monomère (c.1.3), avec un monomère (c.2) qui contient à la fois un groupe éthyléniquement insaturés et un groupe fonctionnel capable de subir une réaction d'addition ou de condensation avec les groupes fonctionnels du copolymère acrylique apportés par le monomère (c.1.3). Ces monomères (c.2) sont par exemple l'acrylate ou le méthacrylate de glycidyle, l'acide acrylique ou méthacrylique, l'acrylate ou le méthacrylate d'hydroxyéthyle, le méthacrylate de 2-isocyanatoéthyle, l'isocyanate de méthacryloyle, le 1-(1-isocyanato-1-méthyléthyl)-3-(1-méthyléthènyl)-benzène, l'anhydride maléique, l'anhydride tétrahydrophtalique. En fait, ces monomères (c.2) sont les mêmes que les monomères (c.1.3); de préférence, on utilisera toutefois des monomères insaturés (c.2) dont le groupe éthyléniquement insaturé est un groupe acryloyle ou méthacryloyle. Il va de soi que l'on choisit un monomère (c.2) dont le groupe fonctionnel est apte à réagir avec celui du copolymère acrylique préparé à la première étape. Ainsi, si le copolymère acrylique contient des groupes glycidyle, on le fera réagir avec l'acide acrylique ou méthacrylique par exemple. A l'inverse, si le copolymère acrylique contient des groupes carboxyles, apportés par exemple par l'acide acrylique ou méthacrylique, on le fera réagir avec l'acrylate ou le méthacrylate de glycidyle ou de β-méthylglycidyle. Si le copolymère acrylique contient le groupe isocyanato, on le fera réagir avec de l'acrylate ou du méthacrylate d'hydroxyéthyle, etc.

Une caractéristique essentielle des polyesters semi-cristallins et des copolymères acryliques incorporés dans les compositions conformes à la présente invention est qu'ils sont constitués de chaînes qui contiennent, pratiquement toutes, des groupes éthyléniquement insaturés, de préférence les groupes acryloyle et/ou méthacryloyle réticulables par irradiation.

Pour être utilisables dans des compositions en poudre, les polyesters semi-cristallins doivent obligatoirement répondre aux exigences suivantes:

- il faut que les polyesters présentent un degré suffisamment élevé de cristallinité; celui-ci sera par exemple supérieur ou égal à 10 Joules/g, de préférence 15 Joules/g, déterminé selon la norme ASTM D 3418-82; et
- la durée de cristallisation doit être suffisamment courte.

Pour répondre à ces exigences, il faut que la chaîne du polyester soit aussi régulière que possible. Dans ce but, il est préférable que les constituants acide et alcoolique entrant dans la composition du polyester semi-cristallin soient des composés symétriques.

On notera par ailleurs que la réaction avec un méthacrylate de glycidyle n'affecte pas le caractère semi-cristallin du polyester obtenu.

Grâce au caractère semi-cristallin des polyesters utilisés dans les compositions selon la présente invention, les poudres présentent une très bonne stabilité au stockage et l'on peut obtenir des enduits à des températures d'application peu élevées de l'ordre de 100 à 150°C. Il est évident aussi que l'abaissement de la température d'application est avantageuse économiquement, puisqu'elle entraîne une économie d'énergie. Un autre avantage non négligeable est que l'on peut obtenir des revêtements sur des substrats plus sensibles à la chaleur tels que, par exemple, le bois et les matières plastiques, en élargissant ainsi le domaine d'application de ce type de produits.

Cependant, par rapport aux polyesters semi-cristallins et copolymères acryliques connus, qui ne contiennent pas de groupes éthyléniquement insaturés, les polyesters semi-cristallins contenant des groupes méthacryloyle terminaux et copolymères acryliques contenant des groupes éthyléniquement insaturés qui sont incorporés dans les compositions en poudre conformes à l'invention présentent aussi une série d'avantages supplémentaires très importants.

Ainsi que cela a déjà été expliqué dans l'introduction de la présente description, pour qu'ils puissent être durcis sous l'effet de la chaleur à basse température, les polyesters semi-cristallins connus , utilisés seuls ou en mélange avec un copolymère acrylique, requièrent la présence d'un agent de réticulation et d'un catalyseur, avec comme conséquence la formation de revêtements défectueux (particules gélifiées et peau d'orange).

L'avantage primordial des compositions en poudre comprenant un mélange des polyesters semi-cristallins et des copolymères acryliques conformément à l'invention est qu'elles peuvent être durcies à basse température, sans agent de réticulation supplémentaire ni catalyseur, par irradiation ultraviolette ou par faisceaux d'électrons accélérés, après une très courte durée à l'état fondu, allant de 1 à 5 minutes.

Ceci permet d'obvier dans une large mesure aux inconvénients précédemment décrits qu'amène la présence d'un agent et d'un catalyseur de réticulation.

En effet, vu l'absence d'agent de réticulation, toute réaction prématurée avec celui-ci est exclue pendant la préparation de la poudre dans l'extrudeuse et surtout au moment où le film fondu doit s'étaler sur la surface du substrat à revêtir. On peut dès lors obtenir facilement la viscosité qui convient pour assurer un étalement parfait du film fondu, étant donné que la réticulation conduisant au durcissement du film fondu ne commence qu'au moment de l'exposition de celui-ci à des rayons ultraviolets ou à des faisceaux d'électrons accélérés. Ces avantages se traduisent dans les faits par l'obtention de revêtements bien tendus ayant un aspect lisse et sans défauts apparents.

Un autre avantage des compositions en poudre comprenant un mélange des polyesters semi-cristallins et des copolymères acryliques conformes à l'invention, comme les exemples qui suivent le montreront, est qu'elles fournissent après durcissement par rayonnement des revêtements présentant une bonne flexibilité, bien meilleure que celle des revêtements obtenus à partir de compositions contenant un copolymère acrylique seul, sans polyester semi-cristallin. Par ailleurs, on obtient en même temps une excellente dureté de surface, aussi bonne que celle qu'on obtient à partir de compositions contenant un copolymère acrylique seul; ce dernier résultat est inattendu, dans la mesure où il est connu que l'incorporation de polyesters semi-cristallins conventionnels, porteurs de groupes carboxyle ou hydroxyle, dans des compositions contenant des polyesters amorphes ou des copolymères acryliques porteurs des mêmes groupes fonctionnels, amène un abaissement de la dureté de surface.

Les compositions en poudre durcissables par rayonnement conformes à l'invention et comprenant un mélange d'au moins un polyester semi-cristallin contenant des groupes méthacryloyle terminaux et un copolymère acrylique contenant des groupes éthyléniquement insaturés contiennent de préférence 40 à 100 parties en poids des polyesters semi-cristallins et des copolymères acryliques pour 100 parties de la composition. En plus des polyesters semi-cristallins et des copolymères acryliques, ces compositions contiennent éventuellement un photoinitiateur et les diverses substances auxiliaires utilisées conventionnellement dans la fabrication de peintures et vernis en poudre. Ces compositions contiennent de préférence 5 à 50 parties en poids, et plus particulièrement 5 à 35 parties en poids du polyester semi-cristallin contenant des groupes méthacryloyle terminaux, à côté de 50 à 95 parties en poids, et de préférence 65 à 95 parties en poids du copolymère acrylique contenant des groupes éthyléniquement insaturés, par rapport à l'ensemble du poids des polymères.

En outre, selon une variante du mode de réalisation de l'invention, les compositions en poudre durcissables par rayonnement comprennent également un oligomère éthyléniquement insaturé. A titre d'exemples de ces oligomères éthyléniquement insaturés, on citera le triacrylate et le triméthacrylate de l'isocyanurate de tris(2-hydroxyéthyle), les époxyacrylates et méthacrylates qui sont formés par réaction d'un composé époxy (par exemple, l'éther diglycidylique du bisphénol A) avec l'acide acrylique ou méthacrylique, les uréthannes acrylates et méthacrylates qui sont formés par réaction d'un di- ou polyisocyanate organique avec un acrylate d'hydroxyalkyle ou un méthacrylate d'hydroxyalkyle et éventuellement un alcool mono- et/ou polyhydroxylé (par exemple, le produit de réaction de l'acrylate et du méthacrylate d'hydroxyéthyle avec le toluène-diisocyanate ou l'isophorone-diisocyanate). Comme ces oligomères éthyléniquement insaturés contiennent des doubles liaisons polymérisables, ils participent également au durcissement par rayonnement et peuvent dès lors fournir des enduits dont la dureté de surface est encore accrue. Selon les applications envisagées, les compositions conformes à l'invention contiennent 0 à 20, de préférence 0 à 10 parties en poids d'oligomère éthyléniquement insaturé pour 100 parties de composition conforme à l'invention.

Pour préparer les polyesters semi-cristallins contenant des groupes méthacryloyle terminaux, on prépare d'abord un polyester contenant des groupes carboxyle terminaux, à chaîne droite ou ramifiée, et on fait réagir ensuite le polyester contenant des groupes carboxyle terminaux ainsi préparé avec le méthacrylate de glycidyle ou le méthacrylate de β-méthylglycidyle.

Le polyester semi-cristallin contenant des groupes carboxyle terminaux est préparé selon les méthodes conventionnelles de synthèse des polyesters par estérification en un ou plusieurs stades.

Si l'on procède en un stade pour l'obtention du polyester semi-cristallin contenant des groupes carboxyle terminaux, on fait réagir ensemble un excès stoechiométrique d'un ou plusieurs acides di- ou polycarboxyliques et un ou plusieurs diols ou polyols appropriés.

Pour l'obtention d'un polyester semi-cristallin contenant des groupes carboxyle terminaux en deux stades, on prépare d'abord un polyester contenant des groupes hydroxyle terminaux à partir d'un ou plusieurs acides di- ou polycarboxyliques et d'un excès stoechiométrique d'un ou plusieurs diols ou polyols appropriés et on estérifie ensuite le polyester contenant des groupes hydroxyle terminaux ainsi obtenu avec un ou plusieurs autres acides di- ou polycarboxyliques appropriés pour obtenir un polyester semi-cristallin contenant des groupes carboxyle terminaux.

Pour la préparation des polyesters semi-cristallins contenant des groupes carboxyle terminaux, on utilise en général un réacteur classique muni d'un agitateur, d'une entrée de gaz inerte (azote), d'une colonne de distillation reliée à un condenseur refroidi à l'eau et d'un thermomètre connecté à un thermorégulateur.

Les conditions d'estérification utilisées pour la préparation de ce polyester sont classiques, à savoir que l'on peut utiliser un catalyseur d'estérification usuel dérivé de l'étain, tel que l'oxyde de dibutylétain, le dilaurate de dibutylétain, le trioctanoate de n-butylétain ou dérivé du titane, tel que le titanate de tétrabutyle, à raison de 0 à 1% en poids des réactifs, et ajouter éventuellement des antioxydants tels que les composés phénoliques IRGANOX 1010 (CIBA-GEIGY) ou IONOL CP (SHELL), seuls ou avec des stabilisants de type phosphonite ou phosphite, tels que le phosphite de tributyle ou le phosphite de triphényle, à raison de 0 à 1% en poids des réactifs.

La polyestérification est généralement effectuée à une température que l'on augmente progressivement de 130°C à environ 180 à 250°C, d'abord sous pression normale, puis sous pression réduite à la fin de chaque stade du procédé, en maintenant ces conditions jusqu'à obtention d'un polyester présentant l'indice d'hydroxyle et/ou d'acide désiré. Le degré d'estérification est suivi par détermination de la quantité d'eau formée au cours de la réaction et des propriétés du polyester obtenu, par exemple, l'indice d'hydroxyle, l'indice d'acide, le poids moléculaire et/ou la viscosité.

Les polyesters semi-cristallins contenant des groupes carboxyle ainsi obtenus présentent le plus souvent les caractéristiques suivantes :

- un indice d'acide de 10 à 150 mg de KOH/g, de préférence de 20 à 100 mg de KOH/g,
- un poids moléculaire moyen en nombre compris entre 800 et 20.000, de préférence entre 1.000 et 8.500,
- un point de fusion bien défini de 60 à 150°C, déterminé par calorimétrie à balayage différentiel (ou DSC) selon la norme ASTM D 3418-82,

- une viscosité à l'état fondu inférieure à 10.000 mPa.s mesurée à 175°C au viscosimétre cône/plateau, (connue sous le nom de "viscosité ICI"), selon la norme ASTM D 4287-88, et

- une fonctionnalité qui est, de préférence, comprise entre 2 et 3.

Pour la préparation des polyesters semi-cristallins contenant des groupes méthacryloyle, on procède de la manière suivante. Au terme de la polycondensation, on laisse refroidir le polyester, à l'état fondu, se trouvant dans le réacteur décrit plus haut, jusqu'à une température comprise entre 100 et 160°C, on y ajoute l'inhibiteur de polymérisation radicalaire et ensuite lentement une quantité substantiellement équivalente de méthacrylate de glycidyle ou de méthacrylate de β-méthylglycidyle.

Les conditions opératoires utilisées pour la préparation des polyesters semi-cristallins contenant des groupes méthacryloyle terminaux sont également classiques, à savoir que l'on peut utiliser un catalyseur de la réaction acide-époxy, comme des dérivés aminés, tels que la 2-phénylimidazoline, des phosphines, telles que la triphénylphosphine, des ammoniums quaternaires, tels que le chlorure de tétrapropylammonium ou le bromure de tétrabutylammonium ou des sels de phosphonium, tels que le bromure d'éthyltriphénylphosphonium ou le chlorure de benzyltriphénylphosphonium, ou des catalyseurs à base de chrome, à raison de 0,01 à 1,0 % en poids des réactifs, et ajouter des inhibiteurs de polymérisation radicalaire, tels que la phénothiazine ou un inhibiteur de type hydroquinone, à raison de 0,01 à 1,0 % en poids des réactifs.

La réaction d'addition est généralement effectuée à une température comprise entre 100 et 160°C. Le degré d'avancement de la réaction est suivi par détermination des propriétés du polyester obtenu, par exemple, l'indice d'hydroxyle, l'indice d'acide, le degré d'insaturation terminale et/ou la teneur en groupes époxy résiduaires.

On prépare le copolymère acrylique porteur de groupe fonctionnels, dans une première étape, par les techniques connues en soi de polymérisation, soit en masse, soit en émulsion, soit en suspension ou encore en solution dans un solvant organique. Parmi ces solvants, on peut citer le toluène, l'acétate d'éthyle ou de n-butyle, le xylène, etc. On copolymérise les monomères en présence d'un initiateur de polymérisation radicalaire (peroxyde de benzoyle, peroxyde de tert.-butyle, peroxyde de décanoyle, azo-bis-isobutyronitrile, peroxyacétate de tert.-amyle, acide 4,4'-azobis-(2-cyanovalérique), 2,2'-azobis[2-méthyle-N-(2-hydroxyéthyle)-propionamide], etc.), en une quantité représentant de 0,1 à 5% en poids des monomères.

Pour obtenir un bon contrôle du poids moléculaire, on ajoute éventuellement au cours de la réaction un agent de transfert de chaîne, de préférence du type mercaptan tel que le n-dodécylmercaptan, le t-dodécanethiol, l'isooctylmercaptan, l'acide 3-mercaptopropionique, le 3-mercapto-1-propanol, etc. ou du type halogénure de carbone, tel que le tétrabromure de carbone, le bromotrichlorométhane, etc. On utilise l'agent de transfert de chaîne en une quantité comprise entre 0 et 10% en poids des monomères engagés dans la copolymérisation.

Pour la préparation du copolymère acrylique porteur de groupes fonctionnels, on utilise en général un réacteur cylindrique, à double enveloppe, muni d'un agitateur, d'un réfrigérant, d'une arrivée et d'une sortie de gaz inerte (azote par exemple) et d'un système d'alimentation par pompe doseuse.

Les conditions de la polymérisation sont classiques. Ainsi, dans le cas de la préparation par polymérisation en solution par exemple, on introduit le solvant organique dans le réacteur et on l'amène à reflux sous atmosphère d'un gaz inerte (azote, dioxyde de carbone, etc.), puis on y ajoute progressivement en plusieurs heures, un mélange homogène des monomères, de l'initiateur de polymérisation radicalaire et, éventuellement, de l'agent de transfert de chaîne. On maintient le mélange réactionnel encore pendant quelques heures sous agitation à reflux, puis on distille la majeure partie du solvant. Par la suite, on débarrasse le copolymère obtenu du reste du solvant sous vide. Le copolymère acrylique obtenu se présente sous la forme d'un produit solide, que l'on broie facilement en une poudre blanchâtre.

Dans une deuxième étape, on fait réagir le copolymère acrylique porteur de groupes fonctionnels avec le monomère (c.2) qui contient à la fois un groupe éthyléniquement insaturé, de préférence acryloyle ou méthacryloyle, et un groupe fonctionnel capable de réagir avec le groupe fonctionnel du copolymère acrylique.

On procède soit en masse, soit dans un solvant comme décrit à la première étape. On ajoute lentement le monomère dans le mélange réactionnel contenant le copolymère acrylique porteur de groupes fonctionnels, l'inhibiteur de polymérisation radicalaire à raison de 0,01 à 1% en poids des réactifs et éventuellement un catalyseur, à raison de 0,01 à 1% en poids des réactifs, à une température comprise entre 50 et 150°C. Le mélange réactionnel est maintenu sous agitation pendant plusieurs heures. Le degré d'avancement de la réaction est suivi par titration.

Selon une variante opératoire applicable lorsqu'on prépare un copolymère acrylique porteur de groupes carboxyle que l'on fait ensuite réagir avec un acrylate ou méthacrylate de glycidyle, on prépare d'abord le polyester semi-cristallin contenant des groupes carboxyle comme expliqué plus haut. On réalise la polymérisation des monomères pour préparer le copolymère acrylique, directement en solution dans le polyester fondu. Dans une étape ultérieure on fait réagir les groupes carboxyle du polyester et du copolymère acrylique en y ajoutant du méthacrylate de glycidyle ou de β-méthylglycidyle. On suit l'avancement de la réaction par détermination de l'indice d'acide. On obtient ainsi un mélange d'un polyester contenant des groupes méthacryloyle terminaux et d'un copolymére acrylique contenant des groupes méthacryloyle, que l'on mélange ensuite avec les autres additifs comme on le verra plus loin.

Les mélanges des polyesters semi-cristallins contenant des groupes méthacryloyle terminaux et des copolymères acryliques contenant des groupes éthyléniquement insaturés décrits ci-dessus sont destinés à servir comme liants dans la préparation de compositions en poudre durcissables par irradiation ultraviolette ou par faisceaux d'électrons accélérés, lesdites compositions étant utilisables notamment comme vernis et peintures se prêtant à une application suivant la technique de dépôt au moyen d'un pistolet pulvérisateur électrostatique ou triboélectrique ou suivant la technique de dépôt en lit fluidisé.

C'est pourquoi la présente invention se rapporte en outre à l'utilisation des compositions en poudre durcissables par rayonnement conformes à l'invention pour la préparation de vernis et peintures en poudre, ainsi qu'aux vernis et peintures en poudre obtenus à l'aide de ces compositions.

Enfin, la présente invention se rapporte également à un procédé de revêtement d'un article qui est caractérisé par l'application sur ledit article, d'une composition en poudre durcissable par rayonnement conforme à l'invention, par dépôt par pulvérisation au pistolet électrostatique ou triboélectrique ou par dépôt en lit fluidisé, suivie de la fusion du revêtement ainsi obtenu par chauffage à une température de 100 à 150°C pendant une durée de 1 à 5 minutes, et du durcissement du revêtement à l'état fondu par irradiation ultraviolette ou par faisceaux d'électrons accélérés.

Pour le radiodurcissement des compositions en poudre conformes à l'invention avec des faisceaux d'électrons accélérés, il n'est pas nécessaire d'utiliser un photoinitiateur, vu que ce type de rayonnement assure à lui seul une production suffisamment importante de radicaux libres pour que le durcissement soit extrêmement rapide. Par contre, lorsqu'il s'agit de photodurcir les compositions en poudre conformes à l'invention avec un rayonnement dont les longueurs d'ondes sont comprises entre 170 et 600 nanomètres (rayonnement UV), la présence d'au moins un photoinitiateur est indispensable.

Les photoinitiateurs utilisables selon la présente invention sont choisis parmi ceux couramment utilisés à cet effet.

Les photoinitiateurs appropriés qui peuvent être utilisés sont les composés carbonylés aromatiques tels que la benzophénone et ses dérivés alkylés ou halogénés, l'anthraquinone et ses dérivés, la thioxanthone et ses dérivés, les éthers de la benzoïne, les diones-$\alpha$ aromatiques ou non-aromatiques, les dialkylacétals de benzile, les dérivés de l'acétophénone et les oxydes de phosphine.

Les photoinitiateurs pouvant convenir sont par exemple la 2,2'-diéthoxyacétophénone, la 2-, 3- ou 4-bromoacétophénone, la 2,3-pentanedione, l'hydroxycyclohexylphénylcétone, la benzaldéhyde, la benzoïne, la benzophénone, le 9,10-dibromoanthracène, la 2-hydroxy-2-rnéthyl-1-phénylpropane-1-one, la 4,4'-dichlorobenzophénone, la xanthone, la thioxanthone, le diméthylcétal de benzile, l'oxyde de diphényl(2,4,6-triméthylbenzoyl)-phosphine etc. Eventuellement, il peut être avantageux d'utiliser un photoactivateur tel que la tributylamine, le 2-(2-aminoéthylamino)éthanol, la cyclohexylamine, la diphénylamine, la tribenzylamine ou les aminoacrylates comme par exemple le produit d'addition d'une amine secondaire telle que la diméthylamine, la diéthylamine, la diéthanolamine, etc., avec un polyacrylate de polyol tel que le diacrylate de triméthylolpropane, de 1,6-hexenediol, etc.

Les compositions en poudre conformes à l'invention contiennent 0 à 15 et de préférence 0,5 à 8 parties en poids de photoinitiateurs pour 100 parties en poids de composition conforme à l'invention.

Les compositions en poudre durcissables par rayonnement conformes à l'invention peuvent également contenir diverses substances auxiliaires utilisées conventionnellement dans la fabrication de peintures et vernis en poudre.

Les substances auxiliaires ajoutées éventuellement aux compositions en poudre durcissables par rayonnement conformes à l'invention sont entre autres des composés absorbant les rayons ultraviolets comme le TINUVIN 900 (de CIBA-GEIGY Corp.), des stabilisants à la lumière à base d'amines à empêchement stérique (par exemple le TINUVIN 144 de CIBA-GEIGY Corp.), des agents régulateurs de fluidité comme le RESIFLOW PV5 (de WORLEE), le MODAFLOW (de MONSANTO), l'ACRONAL 4F (de BASF) ou le CRYLCOAT 109 (de UCB), des agents de dégazage tels que la benzoïne, etc.

Une variété de pigments et de charges minérales peut également être ajoutée aux compositions en poudre durcissables par rayonnement conformes à l'invention. A titre d'exemples de pigments et de charges on citera les oxydes métalliques tels que le dioxyde de titane, l'oxyde de fer, l'oxyde de zinc, etc., les hydroxydes de métaux, les poudres métalliques, les sulfures, les sulfates, les carbonates, les silicates comme par exemple le silicate d'aluminium, le noir de carbone, le talc, les kaolins, les barytes, les bleus de fer, les bleus de plomb, les rouges organiques, les marrons organiques, etc.

Ces substances auxiliaires sont utilisées en quantités usuelles, êtant entendu que si les compositions durcissables par rayonnement conformes à l'invention sont utilisées comme vernis, on omettra l'addition de substances auxiliaires ayant des propriétés opacifiantes.

Pour la préparation des compositions en poudre durcissables par rayonnement, on mélange à sec le polyester semi-cristallin contenant des groupes méthacryloyle terminaux, le copolymère acrylique contenant des groupes éthyléniquement insaturés, et éventuellement l'oligomère éthyléniquement insaturé, et éventuellement le photoinitiateur, et les diverses substances auxiliaires utilisées conventionnellement pour la fabrication de peintures et vernis en poudre, par exemple dans un mélangeur à tambour. On peut également commencer par mélanger le polyester semi-cristallin et le copolymère acrylique à l'état fondu ou utiliser le copolymère acrylique synthétisé dans le polyester cristallin, et mélanger ensuite ces derniers avec les autres constituants de la poudre. On homogénéise ensuite le mélange à une température située dans l'intervalle de 70 à 150°C dans une extrudeuse, par exemple une extrudeuse à vis unique Buss-Ko-Kneter ou une extrudeuse à double vis de type Werner-Pfleiderer, APV-BAKER ou PRISM. Ensuite, on laisse refroidir l'extrudât, on le broie et on le tamise pour obtenir une poudre dont la dimension des particules est comprise entre 10 et 150 micromètres.

Au lieu de la méthode ci-dessus, on peut également dissoudre le polyester semi-cristallin et le copolymère acrylique contenant des groupes éthyléniquement insaturés, et éventuellement l'oligomère insaturé, et éventuellement le photoinitiateur, et les diverses substances auxiliaires dans un solvant tel que le dichlorométhane, broyer pour obtenir une suspension homogène contenant environ 30% en poids de matières solides et évaporer ensuite le solvant par exemple par pulvérisation à sec ("spray drying").

Les peintures et vernis en poudre ainsi obtenus conviennent parfaitement pour une application sur l'article à revêtir par les techniques traditionnelles, c'est-à-dire par la technique bien connue du dépôt en lit fluidisé ou par application au pistolet pulvérisateur électrostatique ou triboélectrique.

Après avoir été appliqués sur l'article concerné, les revêtements déposés sont chauffés dans un four à circulation forcée ou au moyen de lampes infrarouges à une température de 100 à 150°C pendant une durée de 1 à 5 minutes en vue d'obtenir la fusion et l'étalement des particules de poudre en un revêtement lisse, uniforme et continu à la surface dudit article. Le revêtement fondu est ensuite durci par un rayonnement, comme la lumière ultraviolette émise, par exemple, par des radiateurs UV à vapeur de mercure à moyenne pression, d'au moins 80 à 240 W/cm linéaire, ou par n'importe quelle autre source bien connue de l'état de la technique, à une distance de 5 à 20 cm et pendant une durée de 1 à 20 secondes.

Le revêtement fondu peut également être durci avec des faisceaux d'électrons accélérés d'au moins 150 KeV, la puissance des appareils employés étant directement fonction de l'épaisseur de la couche de composition à durcir par polymérisation.

Les compositions en poudre durcissables par rayonnement conformes à l'invention peuvent être appliquées sur les substrats les plus divers, comme par exemple le papier, le carton, le bois, les textiles, les métaux de différente nature, les matières plastiques comme les polycarbonates, les poly(méth)acrylates, les polyoléfines, les polystyrènes, les chlorures de polyvinyle, les polyesters, les polyuréthannes, les polyamides, les copolymères comme l'acrylonitrile-butadiène-styrène (ABS) ou l'acétate-butyrate de cellulose, etc.

Les exemples qui vont suivre illustrent l'invention sans la limiter. Sauf indication contraire, les parties citées dans les exemples sont des parties en poids.

Exemple 1. Synthèse d'un polyester semi-cristallin contenant des groupes méthacryloyle terminaux en trois stades.

1er stade.

Dans un ballon à quatre cols équipé d'un agitateur, d'une colonne de distillation reliée à un condenseur refroidi à l'eau, d'un tube d'admission d'azote et d'un thermomètre connecté à un thermorégulateur, on introduit 419,2 parties de 1,6-hexanediol et 2,1 parties de trioctoate de n-butylétain comme catalyseur. On chauffe le mélange en atmosphère d'azote et sous agitation jusqu'à une température d'environ 140°C, puis on ajoute, toujours sous agitation, 545,4 parties d'acide téréphtalique et on chauffe le mélange graduellement jusqu'à ce que la température atteigne 230°C. Après que l'on ait recueilli environ 95% de la quantité théorique d'eau formée, on obtient un polyester transparent.

Le polyester semi-cristallin contenant des groupes hydroxyle terminaux ainsi obtenu présente les caractéristiques suivantes:

| indice d'acide | 6 mg de KOH/g |
|---|---|
| indice d'hydroxyle | 41 mg de KOH/g |

2e stade.

On laisse refroidir le polyester contenant des groupes hydroxyle terminaux obtenu au premier stade jusqu'à 200°C et on y ajoute 84,8 parties d'acide isophtalique. On chauffe ensuite graduellement le mélange réactionnel jusqu'à la température de 225°C. On laisse le mélange réactionnel à cette température pendant environ deux heures, jusqu'à ce que le mélange réactionnel devienne transparent, on y ajoute 0,8 partie de phosphite de tributyle et on diminue progressivement la pression jusqu'à 50 mm Hg. On poursuit encore la réaction pendant 3 heures à 225°C sous pression réduite.

Le polyester semi-cristallin contenant des groupes carboxyle terminaux ainsi obtenu présente les caractéristiques suivantes:

| indice d'acide | 31 mg de KOH/g |
|---|---|
| indice d'hydroxyle | 2 mg de KOH/g |
| viscosité ICI à 175°C | 2.500 mPa.s |

3e stade.

On laisse refroidir le polyester contenant des groupes carboxyle terminaux obtenu au deuxième stade jusqu'à 150°C et on y ajoute 0,5 partie de di-tert.-butylhydroquinone comme inhibiteur de polymérisation et 4,6 parties de bromure d'éthyltriphénylphosphonium comme catalyseur. On y ajoute ensuite lentement en atmosphère d'oxygène et sous agitation 70,3 parties de méthacrylate de glycidyle. Une heure après que l'addition soit terminée, on obtient un polyester semi-cristallin contenant des groupes méthacryloyle terminaux qui présente les caractéristiques suivantes:

| indice d'acide | 1 mg de KOH/g |
|---|---|
| indice d'hydroxyle | 28 mg de KOH/g |
| teneur en insaturations | 0,5 milliéquivalent dl/g |
| viscosité ICI à 150°C | 4.000 mPa.s |
| température de fusion (déterminée par calorimétrie à balayage différentiel (ou DSC)avec une vitesse de chauffage de 20°C par minute) | 120 °C |
| $\overline{M}$n (CPG) | 4.020 |

Exemple 2. Synthèse d'un polyester semi-cristallin contenant des groupes méthacryloyle terminaux en deux stades.

1er stade.

Dans un ballon à quatre cols équipé d'un agitateur, d'une colonne de distillation reliée à un condenseur refroidi à l'eau, d'un tube d'admission d'azote et d'un thermomètre connecté à un thermorégulateur, on introduit 152,2 parties d'éthylène glycol, 727,1 parties d'acide 1,12-dodécanedioïque et 2,0 parties de trioctoate de n-butylétain comme catalyseur. On chauffe le mélange en atmosphère d'azote et sous agitation jusqu'à une température d'environ 140°C à laquelle l'eau formée commence à distiller. Puis on poursuit le chauffage graduellement jusqu'à ce que la masse atteigne la température de 220°C. Lorsque la distillation sous la pression atmosphérique s'arrête, on ajoute 0,8 partie de phosphite de tributyle et on établit progressivement un vide de 50 mm Hg. On poursuit encore la réaction pendant 3 heures à 220°C sous une pression de 50 mm Hg.
Le polyester semi-cristallin contenant des groupes carboxyle terminaux ainsi obtenu présente les caractéristiques suivantes:

| indice d'acide | 102 mg de KOH/g |
|---|---|
| indice d'hydroxyle | 4 mg de KOH/g |

2e stade.

On suit le mode opératoire décrit au troisième stade de l'exemple 1, mais on laisse refroidir préalablement le polyester contenant des groupes carboxyle terminaux obtenu au premier stade jusqu'à la température de 140°C; on ajoute 3,9 parties de chlorure de benzyltriphénylphosphonium et 1,2 parties de di-tert.-butylhydroquinone; on ajoute lentement 201,1 parties de méthacrylate de glycidyle. Le mélange réactionnel est maintenu sous agitation pendant une heure à 140°C, sous oxygène.
On obtient un polyester semi-cristallin contenant des groupes méthacryloyle terminaux qui présente les caractéristiques suivantes:

| indice d'acide | 1,7 mg de KOH/g |
|---|---|
| indice d'hydroxyle | 78 mg de KOH/g |
| teneur en insaturations | 1,4 milliéquivalent dl/g |

(suite)

| | |
|---|---|
| viscosité ICI à 100°C | 10 mPa.s |
| température de fusion (DSC; 20°C/min.) | 67 ° C |
| $\overline{M}$n (CPG) | 1.406 |

Exemple 3. Synthèse d'un copolymère acrylique contenant des groupes méthacryloyle en deux stades.

1 er stade.

Dans un réacteur à double enveloppe de 5 litres, muni d'un agitateur, d'un condensateur refroidi à l'eau, d'une entrée d'azote et d'une sonde thermique reliée à un thermorégulateur, on introduit 358,7 parties d'acétate de n-butyle. On chauffe et on agite le contenu du réacteur, tandis que l'on purge le solvant au moyen d'azote. Lorsque la température atteint 92°C, on ajoute au mélange réactionnel un mélange de 5,67 parties de 2,2'-azobis-(2-methylbutanenitrile) dans 89,6 parties d'acétate de n-butyle. Ce mélange est ajouté pendant une durée de 215 minutes au moyen d'une pompe péristaltique. 5 minutes après le début de l'ajoute de ce mélange, on commence l'ajoute au mélange réactionnel d'un mélange comprenant 127,5 parties de méthacrylate de glycidyle, 170,8 parties d'acrylate d'isobornyle, 3,78 parties de méthacrylate de butyle, 146,3 parties de styrène, 17,93 parties de n-dodécylmercaptan et 2,24 parties de thiodipropionate de ditridécyle. Ce dernier mélange est ajouté pendant une durée de 180 minutes, au moyen d'une autre pompe péristaltique. Après une durée de synthèse totale de 315 minutes, le mélange réactionnel est déversé dans un évaporateur rotatif, et l'on évapore le solvant à la température de 150°C pendant 45 minutes.
On obtient le copolymère acrylique porteur du groupe fonctionnel glycidyle sous forme d'une poudre blanche. Sa teneur en groupes époxy (E.E.W.) est de 1,89 méq/g, et sa viscosité mesurée au viscosimètre cône/plateau (viscosité ICI) est de 50.000 mPa.s à 125°C.

2e stade.

On place le copolymère obtenu au premier stade dans un ballon de 5 litres muni d'une entrée d'air, d'une thermosonde reliée à un thermorégulateur et d'une entrée pour le réactif que l'on va utiliser. On chauffe le copolymère à 100°C, tout en continuant à le purger au moyen d'air. Après 30 minutes, on ajoute 0,08 partie de di-tert.-butylhydroquinone au copolymère. 60 minutes plus tard, on ajoute au mélange réactionnel 77,21 parties d'acide méthacrylique durant 30 minutes, au moyen d'une pompe péristaltique. La température est maintenue constante pendant toute la synthèse. L'indice d'acide est déterminé à intervalles réguliers par titration. Lorsque la valeur de cet indice d'acide atteint 6,2 mg de KOH/g, on refroidit le copolymère acrylique contenant des groupes méthacryloyle ainsi obtenu.
Les caractéristiques de ce copolymère sont les suivantes:

| | |
|---|---|
| teneur en insaturations | 1,63 méq dl/g |
| viscosité cône/plateau à 125°C | 65.000 mPa.s |
| Tg (DSC, 20°C/min.) | 58 °C |
| $\overline{M}$n (CPG) | 5.645 |

Exemple 4 Synthèse d'un copolymère acrylique contenant des groupes méthacryloyle, en deux stades.

1er stade.

Dans le même appareillage que celui utilisé au 1er stade de l'exemple 3, on introduit 221,3 parties d'acétate de n-butyle, que l'on chauffe sous agitation et en purgeant au moyen d'azote. A la température de 110°C, on ajoute au moyen d'une pompe péristaltique, pendant 180 minutes, un mélange de 102,7 parties de méthacrylate d'hydroxyéthyle, 88,54 parties d'acrylate d'isobornyle, 162,9 parties de méthacrylate de méthyle, 88,54 parties d'acrylate de n-butyle et 13,39 parties de 2,2'-azobis-(2-méthylpropanenitrile). Après une durée de synthèse totale de 315 minutes, le copolymère acrylique porteur de groupes fonctionnels hydroxyle ainsi obtenu présente les caractéristiques suivantes:

| | |
|---|---|
| indice d'hydroxyle | 96,5 mg de KOH/g |

(suite)

| | |
|---|---|
| viscosité cône/plateau à 125°C | 22.500 mPa.s |
| Tg | 53 °C |

2e stade.

Dans le même appareillage qu'au 2ième stade de l'exemple 3, on place la solution obtenue à l'issue du 1er stade. On rince le ballon utilisé au 1er stade au moyen de 234,7 parties d'acétate de n-butyle, que l'on ajoute au ballon utilisé dans le 2ième stade. Le mélange réactionnel est chauffé à 40°C et purgé au moyen d'air. Après 30 minutes, on ajoute 0.09 partie de NORSOCRYL 200 (un inhibiteur commercialisé par la société ELF ATOCHEM) au mélange réactionnel. Une heure plus tard, on ajoute 87,6 parties d'isocyanate de méthacryloyle au mélange réactionnel, au moyen d'une pompe péristaltique, en 180 minutes, à température constante. La teneur en groupes isocyanato est déterminée à intervalles réguliers par titration-retour de la dibutylamine au moyen d'acide chlorhydrique. Lorsque la teneur en groupes isocyanato est tombée à moins de 0,3% de sa valeur initiale, on place le mélange réactionnel dans un évaporateur rotatif, et on évapore le solvant à 30°C sous vide. Le copolymère acrylique contenant des groupes méthacryloyle ainsi obtenu présente les caractéristiques suivantes:

| | |
|---|---|
| teneur en insaturations | 1,45 méq dl/g |
| Tg | 51 °C |
| $\bar{M}$n (CPG) | 3.125 |
| viscosité cône/plateau à 100°C | 50.000 mPa.s. |

Exemple 5 Synthèse d'un mélange d'un polyester semi-cristallin contenant des groupes méthacryloyle terminaux et d'un copolymère acrylique contenant des groupes méthacryloyle, en trois stades.

1er stade. Synthèse du polyester semi-cristallin contenant des groupes carboxyle terminaux.

Un mélange de 216,5 parties d'éthylène glycol, 905,7 parties d'acide 1,12-dodécanedioïque et de 2,5 parties de trioctoate de n-butylétain est mis à réagir selon le mode opératoire de l'exemple 1. Le contenu du réacteur est chauffé avec agitation et sous azote, jusqu'à ce que la température atteigne 140°C. L'eau libérée par la réaction commence à distiller à ce moment. On poursuit le chauffage jusqu'à la température de 220°C. Lorsque la distillation à pression normale s'arrête, on ajoute 1,0 partie de phosphite de tributyle au mélange réactionnel, que l'on place graduellement sous un vide de 50 mm Hg. Après 3 heures à 220°C et sous 50 mm Hg, on obtient un polyester semi-cristallin contenant des groupes carboxyle qui présente les caractéristiques suivantes:

| | |
|---|---|
| indice d'acide | 56 mg de KOH/g |
| indice d'hydroxyle | 2 mg de KOH/g |
| viscosité cône/plateau à 100°C | 950 mPa.s |

2e stade. Synthèse d'un copolymère acrylique contenant des groupes carboxyle dans le polyester obtenu au 1er stade.

Dans un ballon de 3 litres muni d'un agitateur, d'un condensateur refroidi à l'eau, d'une entrée d'azote et d'une thermosonde reliée à un thermorégulateur, on introduit 264,6 parties du polyester obtenu au premier stade. On chauffe le contenu du ballon, sous agitation, et en purgeant le polyester au moyen d'azote. A la température de 92°C, on ajoute au mélange réactionnel au moyen d'une pompe péristaltique, en 180 minutes, un mélange de 220,3 parties de méthacrylate de butyle, 41,9 parties de styrène, 200,7 parties d'acrylate d'isobornyle, 64,8 parties d'acide acrylique, 10,02 parties de 2,2'-azobis-(2-méthylbutanenitrile) et 36,97 parties de n-dodécylmercaptan. La température est maintenue constante à +/-0,3°C pendant toute la durée de la synthèse qui prend 315 minutes. Le mélange du polyester semi-cristallin contenant des groupes carboxyle et du copolymère acrylique porteur de groupes carboxyle obtenus à l'issue de la 2ième étape de synthèse présente les caractéristiques suivantes:

| | |
|---|---|
| Tg (DSC, 20°C/min.) | 69 °C |

(suite)

| | |
|---|---|
| viscosité cône/plateau à 125°C | 1.800 mPa.s |
| indice d'acide | 75,8 mg de KOH/g |

3e stade. Synthèse du mélange du polyester semi-cristallin contenant des groupes méthacryloyle et du copolymère acrylique contenant des groupes méthacryloyle.

Le mélange des polymères tels qu'obtenus à l'issue du 2iéme stade de synthèse est chauffé à 130°C dans le même appareillage, on purge le mélange avec de l'air, et on ajoute 0,1 partie de di-tert.-butylhydroquinone. Après 30 minutes, on ajoute au mélange réactionnel 160,71 parties de méthacrylate de glycidyle au moyen d'une pompe péristaltique, en 30 minutes. On contrôle l'indice d'acide à intervalles réguliers. Après 240 minutes, celui-ci présente la valeur de 12 mg de KOH/g. Le mélange du polyester semi-cristallin contenant des groupes méthacryloyle et du copolymère acrylique contenant des groupes méthacryloyle ainsi obtenu présente les caractéristiques suivantes:

| | |
|---|---|
| Tg (DSC, 20°C/min.) | 66 °C |
| viscosité cône/plateau à 125°C | 400 mPa.s |
| teneur en insaturations | 0,911 méq dl/g |
| $\overline{M}n$ (CPG) | 5.280 |

Pour 100 parties en poids, le mélange contient 31,4 parties du polyester semi-cristallin contenant des groupes méthacryloyle terminaux et 68,6 parties du copolymère acrylique contenant des groupes méthacryloyle.

Exemple 6 Synthèse d'un polyester semi-cristallin contenant des groupes méthacryloyle terminaux en 2 stades.

1er stade

Un mélange de 191,4 parties d'éthylène glycol, de 800,6 parties d'acide 1,12-dodécanedioïque et de 2,2 parties de trioctoate de n-butylétain comme catalyseur est mis en réaction selon le procédé complet décrit au premier stade de l'exemple 2.

Le polyester semi-cristallin contenant des groupes carboxyle terminaux ainsi obtenu présente les caractéristiques suivantes:

| | |
|---|---|
| indice d'acide | 52 mg de KOH/g |
| indice d'hydroxyle | 2 mg de KOH/g |

2e stade

On laisse refroidir le polyester obtenu au 1er stade jusqu'à la température de 140°C et on y ajoute 0,7 partie de di-tert.-butylhydroquinone et 4,4 parties de chlorure de benzyltriphénylphosphonium. On ajoute alors lentement à ce mélange 111,8 parties de méthacrylate de glycidyle et on laisse le mélange sous agitation pendant une heure à 140°C, sous oxygène. On obtient un polyester semi-cristallin contenant des groupes méthacryloyle terminaux qui présente les caractéristiques suivantes:

| | |
|---|---|
| indice d'acide: | 2,0 mg de KOH/g |
| indice d'hydroxyle: | 48 mg de KOH/g |
| teneur en insaturations | 0,8 méq dl/g |
| viscosité ICI à 100°C: | 150 mPa.s |
| température de fusion (DSC; 20°C/min) | 65 °C |
| $\overline{M}n$ (CPG) | 2.530 |

Exemple 7 Synthèse d'un polyester semi-cristallin contenant des groupes méthacryloyle terminaux en 2 stades.

1er stade

Un mélange de 502,6 parties de 1,4-cyclohexanediméthanol, 545,4 parties d'acide adipique et de 2,3 parties de trioctoate de n-butylétain comme catalyseur est mis en réaction selon le procédé complet décrit au premier stade de l'exemple 2.

Le polyester semi-cristallin contenant des groupes carboxyle terminaux ainsi obtenu présente les caractéristiques suivantes:

| indice d'acide: | 31 mg de KOH/ g |
|---|---|
| indice d'hydroxyle: | 2 mg de KOH/g |

2e stade

On laisse refroidir le polyester obtenu au 1er stade jusqu'à la température de 140°C et on y ajoute 0,4 partie de di-tert.-butylhydroquinone et 4,6 parties de chlorure de benzyltriphénylphosphonium. On ajoute alors lentement à ce mélange 70,3 parties de méthacrylate de glycidyle et on laisse le mélange sous agitation pendant une heure à 140°C, sous oxygène. On obtient un polyester semi-cristallin contenant des groupes méthacryloyle terminaux qui présente les caractéristiques suivantes:

| indice d'acide: | 1,7 mg de KOH/g |
|---|---|
| indice d'hydroxyle: | 30 mg de KOH/g |
| teneur en insaturations | 0,5 méq dl/g |
| viscosité ICI à 100°C | 3.600 mPa.s |
| température de fusion (DSC; 20°C/min) | 67 °C |
| $\overline{M}n$ (CPG) | 4.024 |

Exemple 8 Synthèse d'un copolymère acrylique contenant des groupes acryloyle, en deux stades.

1er stade.

Dans le même réacteur que celui décrit au 1er stade de l'exemple 3, on introduit 376,5 parties d'acétate de n-butyle que l'on porte à 92°C, sous agitation et en purgeant le solvant par de l'azote. Un mélange de 94,12 parties d'acétate de n-butyle et de 5,95 parties de 2,2'-azobis-(2-méthylbutanenitrile) est alors ajouté au réacteur au moyen d'une pompe péristaltique pendant 215 minutes. 5 minutes après le début de l'ajoute de ce mélange, on commence l'ajoute au mélange réactionnel d'un mélange comprenant 66,89 parties de méthacrylate de glycidyle, 179,26 parties d'acrylate de isobornyle, 45,41 parties de méthacrylate de n-butyle, 179,02 parties de styrène et 18,82 parties de n-dodécylmercaptan. Ce dernier mélange est ajouté pendant une durée de 180 minutes. Après une durée totale de synthèse de 315 minutes, le mélange réactionnel est déversé dans un évaporateur rotatif, et les produits volatils sont évaporés à 175°C pendant 2 heures.

Le copolymère acrylique porteur de groupes glycidyle ainsi obtenu présente une teneur en groupes époxy (E.E.W.) de 0,949 méq/g et une viscosité ICI de 48.000mPa.s à 125°C.

2e stade.

On place le copolymère obtenu au premier stade dans le même réacteur que celui décrit à l'exemple 3, 2e stade. On chauffe le copolymère à 100°C tout en continuant à le purger au moyen d'air. Après 30 minutes, on y ajoute 0,094 partie de Norsocryl 200. Après 60 minutes, on ajoute 33,91 parties d'acide acrylique durant 30 minutes au moyen d'une pompe péristaltique. La température est maintenue constante durant toute la synthèse, et l'indice d'acide est déterminé par titration à intervalles réguliers. La valeur de cet indice d'acide atteint 4,10 mg de KOH/g après 300 minutes, moment auquel on refroidit le copolymère acrylique contenant des groupes acryloyle ainsi obtenu. Ce copolymère présente les caractéristiques suivantes:

| teneur en insaturations | 0,815 méq dl/g |
|---|---|
| viscosité cône/plateau (ICI) à 125°C | 60.000 mPa.s |

(suite)

| | |
|---|---|
| Tg (DSC, 20°C/min.) | 55 °C |
| $\overline{M}n$ (CPG) | 3.950 |

Exemple 9 Synthèse d'un copolymère acrylique contenant des groupes méthacryloyle, en deux stades.

1er stade.

Dans le même réacteur que celui décrit au 1 er stade de l'exemple 3, on introduit 374,02 parties d'acétate de n-butyle que l'on porte à 92°C, sous agitation et en purgeant le solvant par de l'azote. Un mélange de 93,50 parties d'acétate de n-butyle et de 5,91 parties de 2,2'-azobis-(2-méthylbutanenitrile) est alors ajouté au réacteur au moyen d'une pompe péristaltique pendant 215 minutes. 5 minutes après le début de l'ajoute de ce mélange, on commence l'ajoute au mélange réactionnel d'un mélange comprenant 73,45 parties de méthacrylate de β-méthylglycidyle, 178,03 parties d'acrylate de isobornyle, 52,22 parties de méthacrylate de n-butyle, 163,82 parties de styrène et 18.70 parties de n-dodécylmercaptan. Ce dernier mélange est ajouté pendant une durée de 180 minutes. Apres une durée totale de synthèse de 315 minutes, le mélange réactionnel est placé dans un évaporateur rotatif et mis à sécher à 175°C pendant 2 heures.

Le copolymère acrylique porteur de groupes β-méthylglycidyle ainsi obtenu présente une teneur en groupes époxy (E.E.W.) de 0,950 méq/g et une viscosité ICI de 48.000mPa.s à 125°C.

2e stade.

On place le copolymère obtenu au premier stade dans le même réacteur que celui décrit à l'exemple 3, 2e stade. On chauffe le copolymère à 130°C tout en continuant à le purger au moyen d'air. Après 30 minutes, on y ajoute 0,093 partie de Norsocryl 200. Après 60 minutes, on ajoute 40,24 parties d'acide méthacrylique durant 30 minutes au moyen d'une pompe péristaltique. La température est maintenue constante durant tout la synthèse, et l'indice d'acide est déterminé par titration à intervalles réguliers. La valeur de cet indice d'acide atteint 7,30 mg de KOH/g après 300 minutes, moment auquel on refroidit le copolymère acrylique contenant des groupes méthacryloyle ainsi obtenu.

Ce copolymère présente les caractéristiques suivantes:

| | |
|---|---|
| teneur en insaturations | 0,747 méq dl/g |
| viscosité cône/plateau (ICI) à 125°C | 20.000 mPa.s |
| Tg (DSC, 20°C/min.) | 45°C |
| $\overline{M}n$ (CPG) | 3.665 |

Exemple 10 Synthèse d'un copolymère acrylique contenant des groupes méthacryloyle, en deux stades.

1er stade.

Dans le même réacteur que celui décrit au 1er stade de l'exemple 3, on introduit 370,3 parties de xylène que l'on porte à 142°C, sous agitation et en purgeant le solvant par de l'azote. Un mélange de 92,58 parties de xylène et de 13,89 parties de peroxybenzoate de tert.-butyle est alors ajouté au réacteur au moyen d'une pompe péristaltique pendant 215 minutes. 5 minutes après le début de l'ajoute de ce mélange, on commence l'ajoute au mélange réactionnel d'un mélange comprenant 93,18 parties de 1-(1-isocyanato-1-méthyléthyl)-3-(1-méthyléthènyl)-benzène (TMI), 203,7 parties d'acrylate de isobornyle, 64,20 parties de méthacrylate de n-butyle et 101,83 parties de styrène. Ce dernier mélange est ajouté pendant une durée de 180 minutes, et la durée totale de la synthèse est de 315 minutes.

Le copolymère acrylique porteur de groupes isocyanato ainsi obtenu présente une teneur en groupes isocyanato de 0,971 méq/g et une viscosité ICI de 44.500 mPa.s à 125°C.

2e stade.

On place le mélange réactionnel obtenu au 1er stade dans le même réacteur que celui décrit à l'exemple 3, 2e stade. On le chauffe à 70°C tout en continuant à le purger au moyen d'air. Après 30 minutes, on y ajoute 0,0925 partie de Norsocryl 200. Après 60 minutes, on ajoute 60,22 parties de méthacrylate d'hydroxyéthyle durant 120 minutes au moyen d'une pompe péristaltique. La température est maintenue constante durant tout la synthèse, et le contenu en groupes isocyanato est déterminé par titration-retour au moyen de dibutylamine et d'acide chlorhydrique 0,1 N dans le diméthylformamide, à intervalles réguliers. Le contenu en groupes isocyanato atteint une valeur inférieure à 0,01 méq/g, 120 minutes après la fin de l'ajoute de méthacrylate d'hydroxyéthyle, moment auquel on refroidit le copolymère acrylique contenant des groupes méthacryloyle ainsi obtenu. Le mélange réactionnel est placé dans un évaporateur rotatif et mis à sécher à 150°C pendant 2 heures.

Ce copolymère présente les caractéristiques suivantes:

| | |
|---|---|
| teneur en insaturations | 0,862 méq dl/g |
| viscosité cône/plateau (ICI) à 125°C | 35.000 mPa.s |
| Tg (DSC, 20°C/min.). | 84°C |
| $\overline{M}n$ (CPG) | 4.300 |

Exemple 11 Synthèse d'un copolymère acrylique contenant des groupes éthyténiques, préparé en deux stades.

1er stade.

Dans le même réacteur que celui décrit au 1er stade de l'exemple 3, on introduit 347,95 parties d'acétate d'éthyle que l'on porte à 78°C, sous agitation et en purgeant le solvant par de l'azote. Un mélange de 86,99 parties d'acétate d'éthyle et de 5,50 parties de 2,2'-azobis-(2-méthylpropanenitrile) est alors ajouté au réacteur au moyen d'une pompe péristaltique pendant 215 minutes. 5 minutes après le début de l'ajoute de ce mélange, on commence l'ajoute au mélange réactionnel d'un mélange comprenant 56,58 parties de méthacrylate d'hydroxyéthyle, 260,96 parties de méthacrylate de méthyle, 117,37 parties de méthacrylate de n-butyle, et 26,09 parties de n-dodécylmercaptan. Ce dernier mélange est ajouté pendant une durée de 180 minutes. Après une durée totale de synthèse de 315 minutes, le mélange réactionnel est refroidi et maintenu à 70°C pendant 16 heures.

Le copolymère acrylique porteur de groupes hydroxyle ainsi obtenu présente un indice d'hydroxyle de 52,0 mg de KOH/g et une viscosité ICI de 8.000 mPa.s à 175°C.

2e stade.

Au mélange réactionnel du 1er stade, on ajoute 4,66 parties de tert.-butylhydroquinone, et, après une demi-heure, 1,73 parties de dilaurate de dibutylétain. Un mélange de 87.46 parties de 1-(1-isocyanato-1-méthyléthyl)-3-(1-méthyléthènyl)-benzène (TMI) et 4,66 parties de tert.-butylhydroquinone, dans un rapport stoechiométrique 1/1 par rapport au nombre d'équivalents hydroxyle du copolymère obtenu au 1er stade, est alors ajouté au mélange réactionnel, sur une période de 2 heures. Un échantillon du mélange réactionnel est prélevé juste après la fin de l'ajoute du TMI, et ensuite, à chaque intervalle de 1 heure. Le contenu en groupes isocyanato de ces échantillons est déterminé par titration-retour au moyen de dibutylamine et d'acide chlorhydrique 0,1 N dans le diméthylformamide, à intervalles réguliers. Deux heures après la fin de l'ajoute du TMI, il n'est plus possible de détecter de groupes isocyanato.

Le mélange réactionnel est placé dans un évaporateur rotatif et mis à sécher à 150°C pendant 2 heures.

Le copolymère acrylique porteur de groupes éthyléniques (apportés par le radical 1-méthyléthènyl du TMI) ainsi obtenu présente les caractéristiques suivantes:

| | |
|---|---|
| teneur en insaturations | 0,769 méq dl/g |
| viscosité cône/plateau (ICI) à 150°C | 8.400 mPa.s |
| Tg (DSC, 20°C/min.) | 55 °C |
| $\overline{M}n$ (CPG) | 2.500 |

Exemple 12 Synthèse d'un copolymère acrylique contenant des groupes éthyléniques, en deux stades.

1er stade.

Dans le même réacteur que celui décrit au 1er stade de l'exempte 3, on introduit 377,5 parties d'acétate de n-butyle que l'on porte à 92°C, sous agitation et en purgeant le solvant par de l'azote. Un mélange de 94,4 parties d'acétate de n-butyle et de 5,97 parties de 2,2'-azobis-(2-méthylbutanenitrile) est alors ajouté au réacteur au moyen d'une pompe péristaltique pendant 215 minutes. 5 minutes après le début de l'ajoute de ce mélange, on commence l'ajoute au mélange réactionnel d'un mélange comprenant 60,4 parties de méthacrylate d'hydroxyéthyle, 221,4 parties de méthacrylate de méthyle, 142,6 parties de méthacrylate de n-butyle, 47,21 parties de styrène et 4,72 parties de n-dodécylmercaptan. Ce dernier mélange est ajouté pendant une durée de 180 minutes, et la durée totale de la synthèse est de 315 minutes.

Un échantillon séché du copolymère acrylique porteur de groupes hydroxyle ainsi obtenu présente un $\overline{M}$n de 5.600 et une viscosité ICI de 47.000mPa.s à 150°C.

2e stade.

On place le mélange réactionnel obtenu au premier stade dans le même réacteur que celui décrit à l'exemple 3, 2e stade. On le chauffe à 125°C tout en continuant à le purger au moyen d'air. On ajoute ensuite 45,5 parties d'anhydride maléique, préchauffé à 90°C, durant 120 minutes au moyen d'une pompe à piston. La température est maintenue constante durant tout la synthèse. L'indice d'acide est déterminé par titration à intervalles réguliers. Lorsque la valeur de cet indice d'acide atteint 22 mg de KOH/g, on refroidit le mélange réactionnel, et on le place dans un évaporateur rotatif où il est mis à sécher à 150°C pendant 2 heures.

Le copolymére acrylique porteur de groupes éthyléniques (apportés par l'insaturation éthylénique de l'anhydride maléique) ainsi obtenu présente les caractéristiques suivantes:

| | |
|---|---|
| teneur en insaturations | 0,878 méq dl/g |
| viscosité cône/plateau (ICI) à 150°C | 36.000 mPa.s |
| Tg (DSC, 20°C/min.) | 47,5 °C |
| $\overline{M}$n (CPG) | 5.880 |

Exemple 13 Préparation de compositions de revêtement en poudre, stabilité de ces compositions et propriétés des revêtements obtenus après durcissement par rayonnement.

A partir des polyesters semi-cristallins contenant des groupes méthacryloyle terminaux et des copolyméres acryliques contenant des groupes éthyléniquement insaturés, obtenus aux exemples 1 à 12, on prépare trois séries de poudres de formulation différente A, B et C. Dans ces formulations, on rapporte les parties en poids de l'ensemble des polyesters et copolymères acryliques mis en oeuvre. Le tableau II indique le numéro de l'exemple de synthèse ainsi que la proportion de chaque polyester et copolymère acrylique mis en oeuvre, par rapport à l'ensemble des polyesters et des copolymères acryliques

| | | |
|---|---|---|
| A) | Polyester semi-cristallin et/ou copolymère acrylique | 96,65 parties |
| | Photoinitiateur (IRGACURE 1800 de la société CIBA-GEIGY) | 2,50 parties |
| | Agent régulateur de fluidité (BYK 356) | 0,5 partie |
| | Agent de dégazage (Benzoïne) | 0,35 partie |
| B) | Polyester semi-cristallin et copolymère acrylique | 69,40 parties |
| | Dioxyde de titane (Kronos CL 2310) | 29,75 parties |
| | Agent régulateur de fluidité (BYK 356) | 0,5 partie |
| | Agent de dégazage (Benzoïne) | 0,35 partie |
| C) | Polyester semi-cristallin et/ou copolymère acrylique, | 72,49 parties |
| | Photoinitiateur (mélange d'IRGACURE 2959 et d'IRGACURE 819 (Ciba-Geigy) dans un rapport en poids 1/1) | 2,50 parties |
| | Dioxyde de titane (Kronos CL 2310) | 24,16 parties |
| | Agent régulateur de fluidité (BYK 356) | 0,5 partie |
| | Agent de dégazage (Benzoïne) | 0,35 partie |

On prépare ces compositions en poudre en mélangeant à sec les polyesters et les copolymères acryliques et, pour les formulations A et C, les photoinitiateurs, avec les diverses substances auxiliaires utilisées conventionnellement pour la fabrication des peintures et vernis en poudre. Le mélange obtenu est homogénéisé à une température de 80 à 100°C dans une extrudeuse à double vis PRISM de 16 mm, avec L/D = 15/1 et l'extrudât est refroidi et broyé dans un broyeur RETSCH ZM 100, avec mailles de 0,5 mm. Pour terminer, la poudre est tamisée pour obtenir une dimension des particules comprise entre 20 et 100 micromètres.

Une partie des poudres est soumise au test de stabilité. Pour conduire ce test, on place 25 g de poudre dans un récipient de 100 ml. On place le récipient dans un bain d'eau, de manière à ce qu'il plonge dans l'eau jusqu'au 3/4 de sa hauteur.

Le test démarre au jour n°1, l'eau du bain étant placée à 38°C. Après 24 heures et pendant 5 jours consécutifs, avec augmentation de la température selon le Tableau I, on évalue l'agglomération de la poudre.

Tableau I

|  | T°C | Evaluation |
|---|---|---|
| jour 1 | 38 | jour 2 |
| jour 2 | 40 | jour 3 |
| jour 3 | 42 | jour 4 |
| jour 4 | 45 | jour 5 |

Chaque jour, une cotation entre 5 (excellent) et 0 (très mauvais) est donnée aux poudres, selon l'échelle suivante:

  5: excellent, la poudre est fluide sans problème;
  4: bon, la poudre est fluide avec un léger mouvement de la main;
  3: acceptable, la poudre est fluide avec un mouvement de la main, mais quelques petits agglomérats sont présents;
  2: mauvais, la poudre ne peut être fluidifiée qu'avec problèmes, beaucoup d'agglomérats étant présents;
  0: très mauvais, la poudre ne peut pas être fluidifiée.

Au dernier jour de la période de test, une cotation sur l'agglomération de la poudre est donnée:

++:  aucun agglomérat n'est présent;
+:  quelques petits agglomérats sont présents qui peuvent être réduits en poudre par une légère pression;
+-:  des agglomérats plus grands sont présents, qui peuvent être réduits en poudre par une légère pression;
-:  agglomérats assez durs;
--:  agglomérats durs;
---:  un bloc s'est formé.

Les résultats sont repris au Tableau II.

Une autre partie des poudres formulées comme décrit ci-dessus est appliquée au moyen d'un pistolet pulvérisateur électrostatique sous une tension de 70 kV sur des panneaux en acier laminés à froid, non traités, en une épaisseur de film de 50 à 70 micromètres.

Les enduits de formulation A et C déposés subissent ensuite une fusion au moyen d'un rayonnement infrarouge de longueur d'onde moyenne (émetteur IR au carbone de HEREAUS, d'une densité d'irradiation de 80 kW/m$^2$), à la température de 130°C pendant une durée d'environ 4 minutes. Ensuite, on soumet les enduits à l'état fondu obtenus avec les poudres à une irradiation à la lumière ultraviolette émise par des lampes UV à vapeur de mercure à moyenne pression (DQ 1023 de la société HEREAUS INSTRUMENTS GmbH) de 100 W/cm, à une distance de 15 cm et pendant une durée de 2 secondes.

Les enduits de formulation B sont fondus par IR de la même manière que les enduits de formulation A, mais à la température de 200°C pendant 30 secondes suivi par 3 minutes à 120°C. Ensuite, sous atmosphère d'azote, les enduits sont soumis à un faisceau d'électrons accélérés produit par une cathode linéaire de 170 KeV (de la société ENERGY SCIENCES Inc.).

On soumet les revêtements durcis ainsi obtenus aux tests classiques. Les résultats obtenus sont reportés dans le tableau II, dans lequel

la première colonne    identifie la composition testée;
la deuxième colonne    le type de formulation utilisé;
la troisième colonne    le numéro de l'exemple de synthèse du polyester semi-cristallin porteur de groupes méthacryloyle terminaux et sa quantité en % en poids par rapport au poids d'ensemble du polyester et du copolymère acrylique;
la quatrième colonne    le numéro de l'exemple de synthèse du copolymère acrylique porteur de groupes éthyléniquement insaturés et sa quantité en % en poids par rapport au poids d'ensemble du polyester et du copolymère acrylique;
la cinquième colonne    la valeur de la résistance au choc direct, en kg.cm, selon la norme ASTM D2795;
la sixième colonne    la valeur de la résistance au choc inverse, en kg.cm, selon la norme ASTM D2795;

| | |
|---|---|
| la septième colonne | la valeur de la dureté au crayon sous un angle de 45°, avec une force de 7,5 newtons, mesurée selon la norme ASTM D3363-92A; |
| la huitième colonne | la résistance à la méthyléthylcétone, qui correspond au nombre de doubles frottements (aller et retour) avec un tampon d'ouate imbibé de méthyléthylcétone, qui n'altère pas l'aspect de la surface du film durci; |
| la neuvième colonne | une évaluation visuelle de l'enduit, selon laquelle, "bon" signifie que le revêtement durci possède un aspect lisse et brillant, sans défauts apparents tels que cratères, piqûres, etc., "moyen" signifie que le revêtement durci présente un aspect de peau d'orange, avec une brillance mesurée sous un angle de 60° qui est inférieure à 80% et des défauts de surface; et |
| la dixième colonne | la stabilité au stockage, évaluée comme expliqué ci-avant. |

Ces résultats montrent clairement que les compositions en poudre conformes à l'invention à base d'un mélange d'un polyester semi-cristallin contenant des groupes méthacryloyle terminaux et d'un copolymère acrylique contenant des groupes éthyléniquement insaturés donnent des enduits de peinture et de vernis qui possèdent des caractéristiques excellentes.

En effet, la comparaison des propriétés des enduits obtenus avec les compositions selon l'invention (a) à (d), (g), (i) à (k), (m) et (n), avec celles des enduits obtenus avec les compositions comparatives (e), (f), (h), (l) et (o), qui ne contiennent pas des polyesters semi-cristallins porteurs de groupes méthacryloyle, montre que:

- la flexibilité (choc direct et inverse) est bien meilleure pour les compositions selon l'invention;
- l'aspect de surface est également bien meilleur pour les compositions selon l'invention;
- il en va de même pour la résistance aux solvants.

Quant à la dureté de surface, elle est très élevée, allant jusqu'à 3H, aussi bien pour les compositions selon l'invention que pour les compositions comparatives.

Toutes ces propriétés sont obtenues à des températures de fusion aussi basses que 120-130°C.

Par ailleurs, les compositions conformes à l'invention sont stables au stockage.

## Tableau II

| Composition | Formulation | Polyester semi-cristallin n° de l'exemple et quantité | Copolymère acrylique: n° de l'exemple et quantité | Résistance choc direct | Résistance choc inverse | Dureté au crayon | MEK rubs | Evaluation visuelle | Stabilité au stockage |
|---|---|---|---|---|---|---|---|---|---|
| (a) | A | Exemple 2 20 | Exemple 3 80 | 40 | 20 | 3H | > 100 | bon | 5,4,4,4 + |
| (b) | A | Exemple 5 31,4 | Exemple 5 68,6 | 40 | 40 | H | > 150 | bon | 5,5,5,4 ++ |
| (c) | A | Exemple 2 15 | Exemple 4 85 | 40 | 40 | 3H | > 100 | bon | 5,4,3,3 + |
| (d) | B | Exemple 2 20 | Exemple 3 80 | 20 | 20 | 2H | > 100 | bon | 5,5,4,4,+ |
| (e)* | A | - | Exemple 3 100 | 0 | 0 | 2H | 50 | moyen | 5,5,4,3 + |
| (f)* | C | - | Exemple 8 100 | 0 | 0 | 2H | 40 | moyen | 5,4,4,3 + |
| (g) | C | Exemple 7 30 | Exemple 8 70 | 40 | 40 | 2H | > 100 | bon | 5,4,4,3 + |
| (h)* | C | - | Exemple 9 100 | 0 | 0 | 2H | 50 | moyen | 5,4,4,3 + |

EP 0 934 371 B1

## Tableau II (suite)

| Composition | Formulation | Polyester semi-cristallin n° de l'exemple et quantité | Copolymère acrylique: n° de l'exemple et quantité | Résistance choc direct | Résistance choc inverse | Dureté au crayon | MEK rubs | Evaluation visuelle | Stabilité au stockage |
|---|---|---|---|---|---|---|---|---|---|
| (i) | C | Exemple 6 15 | Exemple 9 85 | 20 | 40 | 3H | > 100 | bon | 4,4,3,3 + |
| (j) | A | Exemple 7 30 | Exemple 10 70 | 40 | 40 | 3H | > 100 | bon | 5,4,3,3 + |
| (k) | C | Exemple 7 30 | Exemple 10 70 | 20 | 40 | 2H | > 100 | bon | 5,4,3,3 + |
| (l)* | A | – | Exemple 11 100 | 0 | 0 | H | 40 | moyen | 5,4,4,3 + |
| (m) | A | Exemple 2 25 | Exemple 11 75 | 40 | 40 | 2H | > 100 | bon | 5,4,4,3 + |
| (n) | A | Exemple 2 20 | Exemple 12 80 | 40 | 40 | 3H | > 100 | bon | 4,4,3,3 + |
| (o)* | A | – | Exemple 12 100 | 0 | 0 | 2H | 20 | moyen | 5,4,4,3 + |

* Les compositions (e), (f), (h), (l) et (o), marquées * sont testées à titre de comparaison.

**Revendications**

1. Compositions en poudre durcissables par rayonnement **caractérisées en ce qu'**elles comprennent un mélange d'au moins un polyester semi-cristallin contenant des groupes méthacryloyle terminaux et d'au moins un copolymère acrylique contenant des groupes éthyléniquement insaturés, ces polyesters comprenant les produits de réaction d'un méthacrylate de glycidyle et d'un polyester semi-cristallin contenant des groupes carboxyle terminaux, ce dernier étant choisi parmi

   (a) un polyester qui est le produit de réaction de

   (1) un constituant acide qui contient (a.1.1) 85 à 100 moles % d'acide téréphtalique, d'acide 1,4-cyclohexanedicarboxylique ou d'acide 1,12-dodécanedioïque et (a. 1.2) 0 à 15 moles % d'au moins un autre acide di- ou polycarboxylique aliphatique, cycloaliphatique ou aromatique ayant de 4 à 14 atomes de carbone, et
   (2) un constituant alcoolique qui contient (a.2.1) 85 à 100 moles % d'un diol aliphatique saturé à chaîne droite ayant de 2 à 12 atomes de carbone et (a.2.2) 0 à 15 moles % d'au moins un autre di- ou polyol aliphatique ou cycloaliphatique ayant de 2 à 15 atomes de carbone; et

   (b) un polyester qui est le produit de réaction de

   (1) un constituant acide qui contient (b.1.1) 85 à 100 moles % d'un acide dicarboxylique aliphatique saturé à chaîne droite ayant de 4 à 14 atomes de carbone et (b.1.2) 0 à 15 moles % d'au moins un autre acide di- ou polycarboxylique aliphatique, cycloaliphatique ou aromatique ayant de 4 à 14 atomes de carbone, et
   (2) un constituant alcoolique qui contient (b.2.1) 85 à 100 moles % de 1,4-cyclohexanediol, ou de 1,4-cyclohexanediméthanol et (b.2.2) 0 à 15 moles % d'au moins un autre di- ou polyol aliphatique ou cycloaliphatique ayant de 2 à 15 atomes de carbone;

   et ledit copolymère acrylique contenant des groupes éthyléniquement insaturés étant constitué du
   (c) produit de réaction de

   (1) un copolymère acrylique porteur de groupes fonctionnels contenant (c.1.1) 40 à 95 moles% calculé sur l'ensemble des monomères (c.1.1) et (c.1.2) d'au moins un monomère contenant le groupe acryloyle ou méthacryloyle. (c.1.2) 5 à 60 moles% calculé sur l'ensemble des monomères (c.1.1) et (c.1.2) d'au moins un autre monomère éthyléniquement insaturé et (c.1.3) 5 à 60 moles%, calculé sur le total des quantités de (c.1.1) et (c.1.2), d'un autre monomère éthyléniquement insaturé porteur d'un groupe fonctionnel capable de subir une réaction d'addition ou de condensation et choisi parmi les groupes époxy, carboxyle, hydroxyle ou isocyanato; avec
   (2) un monomère (c.2) contenant un groupe éthyléniquement insaturé et un groupe fonctionnel capable de subir une réaction d'addition ou de condensation avec le groupe fonctionnel du monomère (c.1.3) incorporé dans le copolymère acrylique (1).

2. Compositions selon la revendication 1, **caractérisées en ce que** les groupes éthyléniquement insaturés du copolymère acrylique (c) sont des groupes acryloyle ou méthacryloyle, le groupe éthyléniquement insaturé du monomère (c.2) étant un groupe acryloyle ou méthacryloyle.

3. Compositions selon l'une quelconque des revendications 1 ou 2, **caractérisées en ce que** l'acide di- ou polycarboxylique (a.1.2) est choisi parmi l'acide maléique, l'acide fumarique, l'acide isophtalique, l'acide phtalique, l'acide téréphtalique, l'acide 1,2-cyclohexanedicarboxylique, l'acide 1,3-cyclohexanedicarboxylique, l'acide 1,4-cyclohexanedicarboxylique, l'acide succinique, l'acide glutarique, l'acide adipique, l'acide pimélique, l'acide subérique, l'acide azélaïque, l'acide sébacique. l'acide trimellitique, l'acide pyromellitique et leurs anhydrides, seuls ou en mélange.

4. Compositions selon l'une quelconque des revendications 1 à 3, **caractérisées en ce que** le diol aliphatique saturé à chaîne droite (a.2.1) est choisi parmi l'éthylène glycol, le 1,4-butanediol, le 1,5-pentanediol et le 1,6-hexanediol.

5. Compositions selon l'une quelconque des revendications 1 à 4, **caractérisées en ce que** le di- ou polyol aliphatique ou cycloaliphatique (a.2.2) est choisi parmi le 1,4-cyclohexanediol, le 1,4-cyclohexanediméthanol, le bisphénol A hydrogéné, le triméthylolpropane, le ditriméthylolpropane, le triméthyloléthahe, le pentaérythritol et leurs mélanges.

6.  Compositions selon l'une quelconque des revendications 1 à 5, **caractérisées en ce que** l'acide dicarboxylique aliphatique saturé à chaîne droite (b.1.1) est choisi parmi l'acide succinique, l'acide glutarique, l'acide adipique, l'acide pimélique, l'acide subérique, l'acide azélaïque, l'acide sébacique, l'acide 1,12-dodécanedioïque et leurs anhydrides, seuls ou en mélange.

7.  Compositions selon l'une quelconque des revendications 1 à 6, **caractérisées en ce que** l'acide di- ou polycarboxylique (b.1.2) est choisi parmi l'acide maléique, l'acide fumarique, l'acide phtalique, l'acide téréphtalique, l'acide isophtalique, l'acide 1,2-cyclohexanedicarboxylique, l'acide 1,3-cyclohexanedicarboxylique, l'acide 1,4-cyclohexanedicarboxylique, l'acide trimellitique, l'acide pyromellitique et leurs anhydrides, seuls ou en mélange.

8.  Compositions selon l'une quelconque des revendications 1 à 7, **caractérisées en ce que** le di- ou polyol aliphatique ou cycloaliphatique (b.2.2) est choisi parmi l'éthylène glycol, le propylène glycol, le 1,4-butanediol, le 1,5-pentanediol, le 1,6-hexanediol, le 1,4-cyclohexanediol, le 1,4-cyclohexanediméthanol, le bisphénol A hydrogéné, le triméthylolpropane, le ditriméthylolpropane, le triméthyloléthane, le pentaérythritol et leurs mélanges.

9.  Compositions selon l'une quelconque des revendications 1 à 8, **caractérisées en ce que** ledit polyester semi-cristallin contenant des groupes méthacryloyle terminaux présente un degré d'insaturation terminale de 0,17 à 2,0 milliéquivalents de doubles liaisons par gramme de polyester.

10. Compositions selon l'une quelconque des revendications 1 à 9, **caractérisées en ce que** ledit polyester semi-cristallin contenant des groupes méthacryloyle terminaux possède un poids moléculaire moyen en nombre compris entre 1.000 et 20.000.

11. Compositions selon l'une quelconque des revendications 1 à 10, **caractérisées en ce que** ledit polyester semi-cristallin contenant des groupes méthacryloyle terminaux présente une température de fusion de 60 à 150°C.

12. Compositions selon l'une quelconque des revendications 1 à 11, **caractérisées en ce qu'**un méthacrylate glycidyle est choisi parmi le méthacrylate de glycidyle et le méthacrylate de β-méthylglycidyle.

13. Compositions selon l'une quelconque des revendications 1 à 12, **caractérisées en ce que** le monomère contenant le groupe acryloyle ou méthacryloyle (c.1.1) est choisi parmi des monomères tels que les acrylates ou méthacrylates de méthyle, d'éthyle, de propyle, de n-butyle, d'isobutyle, de tert.-butyle, de 2-éthylhexyle, de stéaryle, de tridécyle, de cyclohexyle, de benzyle, de phényle, de diméthylaminoéthyle, de diéthylaminoéthyle, d'isobornyle, de polysiloxane, de caprolactone, seuls ou en mélange.

14. Compositions selon l'une quelconques des revendications 1 à 13, **caractérisées en ce que** le monomère éthyléniquement insaturé (c.1.2), différent du monomère (c.1.1), est choisi parmi le styrène, l'α-méthylstyrène, le vinyltoluène, l'acrylonitrile, le méthacrylonitrile, l'acétate ou le propionate de vinyle, l'acrylamide, le méthacrylamide, le méthylolméthacrylamide, le chlorure de vinyle, l'éthylène, le propylène, les oléfines ayant de 4 à 20 atomes de carbone, seuls ou en mélange.

15. Compositions selon l'une quelconque des revendications 1 à 14, **caractérisées en ce que** le monomère éthyléniquement insaturé (c.1.3), différent des monomères (c.1.1) et. (c.1.2), et porteur d'un groupe fonctionnel capable de subir une réaction d'addition ou de condensation et choisi parmi les groupes époxy, carboxyle, hydroxyle ou isocyanato, peut être l'acrylate ou le méthacrylate de glycidyle, l'acide acrylique ou méthacrylique, l'acrylate ou le méthacrylate d'hydroxyéthyle, le méthacrylate de 2-isocyanatoéthyle, l'isocyanate de méthacryloyle, le 1-(1-isocyanato-1-méthyléthyl)-3-(1-méthyléthènyl)-benzène, l'anhydride maléique, l'anhydride tétrahydrophtalique.

16. Compositions selon l'une quelconque des revendications 1 à 15 **caractérisées en ce que** le monomère (c.2) qui contient à la fois un groupe éthyléniquement insaturé et un groupe fonctionnel capable de subir une réaction d'addition ou de condensation avec le groupe fonctionnel du copolymère acrylique apporté par le monomère (c.1.3). est choisi parmi les monomères (c.1.3).

17. Compositions selon l'une quelconque des revendications 1 à 16, **caractérisées en ce que** ledit copolymère acrylique contenant des groupes éthyléniquement insaturés présente un degré d'insaturation de 0,35 à 3,5 milliéquivalents de doubles liaisons par gramme du copolymère.

18. Compositions selon l'une quelconque des revendications 1 à 17, **caractérisées en ce que** le copolymère acrylique contenant des groupes éthyléniquement insaturés présente une viscosité allant de 10.000 à 100.000 mPa.s à 125°C.

19. Compositions selon l'une quelconque des revendications 1 à 18, **caractérisées en ce que** le copolymère acrylique contenant des groupes éthyléniquement insaturés possède un poids moléculaire moyen en nombre compris entre 1.000 et 8.000.

20. Compositions selon l'une quelconque des revendications 1 à 19, **caractérisées en ce que** le copolymère acrylique contenant des groupes éthyléniquement insaturés présente une température de transition vitreuse allant de 45 à 100°C.

21. Compositions selon l'une quelconque des revendications 1 à 20, **caractérisées en ce que** le mélange des polyester et copolymère acrylique contient 5 à 50 parties en poids du polyester semi-cristallin contenant des groupes méthacryloyle terminaux, et 50 à 95 parties en poids du copolymère acrylique contenant des groupes éthyléniquement insaturés, par rapport au poids total de ces deux constituants.

22. Compositions selon l'une quelconque des revendications 1 à 21, **caractérisées en ce qu'**elles sont exemptes d'agents de réticulation et de catalyseurs.

23. Compositions selon l'une quelconque des revendications 1 à 22, **caractérisées en ce qu'**elles comprennent, en plus, un oligomère éthyléniquement insaturé.

24. Compositions selon la revendication 23, **caractérisées en ce qu'**elles comprennent pour 100 parties en poids, jusqu'à 20 parties en poids de l'oligomère éthyléniquement insaturé.

25. Compositions durcissables par irradiation ultraviolette selon l'une quelconque des revendications 1 à 24, **caractérisées en ce qu'**elles comprennent, en plus, un photoinitiateur et éventuellement un photoactivateur.

26. Compositions selon la revendication 25, **caractérisées en ce qu'**elles comprennent pour 100 parties en poids, jusqu'à 15 parties en poids de photoinitiateur.

27. Procédé de revêtement d'un article, **caractérisé en ce qu'**on applique sur ledit article une composition en poudre durcissable par rayonnement selon l'une quelconque des revendications 1 à 26, par dépôt par pulvérisation au pistolet électrostatique ou triboélectrique ou par dépôt en lit fluidisé, **en ce qu'**on fait fondre le revêtement ainsi obtenu par chauffage à une température de 100 à 150°C, pendant une durée de 1 à 5 minutes et **en ce que** l'on expose ensuite ledit revêtement à l'état fondu à des rayons ultraviolets ou à des faisceaux d'électrons accélérés pendant une durée suffisante pour former un revêtement durci.

28. Vernis et peintures en poudre durcissables par irradiation avec un faisceau d'électrons accélérés, obtenus à partir de compositions selon l'une quelconque des revendications 1 à 24.

29. Vernis et peintures en poudre durcissables par irradiation ultraviolette, obtenus à partir de compositions selon l'une quelconque des revendications 1 à 26.

30. Articles revêtus entièrement ou partiellement de vernis et/ou de peintures selon l'une quelconque des revendications 27 à 29.

**Patentansprüche**

1. Strahlungshärtbare pulverförmige Zusammensetzungen, **dadurch gekennzeichnet, dass** sie ein Gemisch von wenigstens einem semikristallinen Polyester mit Methacryloylendgruppen und wenigstens einem Acrylcopolymer mit ethylenisch ungesättigten Gruppen umfassen, wobei diese Polyester die Reaktionsprodukte eines Glycidylmethacrylats und eines semikristallinen Polyesters mit Carboxylendgruppen umfassen, wobei dieser Letztere ausgewählt ist unter

   (a) einem Polyester, der das Produkt der Reaktion ist von

(1) einem sauren Bestandteil, der (a.1.1) 85 bis 100 Mol-% Terephthalsäure, 1,4-Cyclohexandicarbonsäure oder 1,12-Dodecandisäure und (a.1.2) 0 bis 15 Mol-% wenigstens einer weiteren aliphatischen, cycloaliphatischen oder aromatischen Di- oder Polycarbonsäure mit 4 bis 14 Kohlenstoffatomen enthält, und

(2) einem alkoholischen Bestandteil, der (a.2.1) 85 bis 100 Mol-% eines gesättigten aliphatischen Diols mit gerader Kette mit 2 bis 12 Kohlenstoffatomen und (a.2.2) 0 bis 15 Mol-% wenigstens eines weiteren aliphatischen oder cycloaliphatischen Di- oder Polyols mit 2 bis 15 Kohlenstoffatomen enthält; und

(b) einem Polyester, der das Produkt der Reaktion ist von

(1) einem sauren Bestandteil, der (b.1.1) 85 bis 100 Mol-% einer gesättigten aliphatischen Dicarbonsäure mit gerader Kette mit 4 bis 14 Kohlenstoffatomen und (b.1.2) 0 bis 15 Mol-% wenigstens einer weiteren aliphatischen, cycloaliphatischen oder aromatischen Di- oder Polycarbonsäure mit 4 bis 14 Kohlenstoffatomen enthält, und

(2) einem alkoholischen Bestandteil, der (b.2.1) 85 bis 100 Mol-% 1,4-Cyclohexandiol oder 1,4-Cyclohexandimethanol und (b.2.2) 0 bis 15 Mol-% wenigstens eines weiteren aliphatischen oder cycloaliphatischen Di- oder Polyols mit 2 bis 15 Kohlenstoffatomen enthält,

und besagtes Acrylcopolymer mit ethylenisch ungesättigten Gruppen besteht aus dem
(c) Produkt der Reaktion von

(1) einem Acrylcopolymer, das funktionelle Gruppen trägt, das (c.1.1) 40 bis 95 Mol-%, berechnet auf die Gesamtheit der Monomere (c.1.1) und (c.1.2), wenigstens eines Monomers, das die Acryloyl- oder Methacryloylgruppe enthält, (c.1.2) 5 bis 60 Mol-%, berechnet auf die Gesamtheit der Monomere (c.1.1) und (c.1.2), wenigstens eines weiteren ethylenisch ungesättigten Monomers und (c.1.3) 5 bis 60 Mol-%, berechnet auf die Gesamtmengen von (c.1.1) und (c.1.2), eines weiteren ethylenisch ungesättigten Monomers, das eine funktionelle Gruppe trägt, die eine Additions- oder Kondensationsreaktion eingehen kann und unter den Gruppen Epoxy, Carboxyl, Hydroxyl oder Isocyanato ausgewählt ist, enthält, mit

(2) einem Monomer (c.2), das eine ethylenisch ungesättigte Gruppe und eine funktionelle Gruppe enthält, die eine Additions- oder Kondensationsreaktion mit der funktionellen Gruppe des Monomers (c.1.3), das dem Acrylcopolymer (1) zugesetzt wird, eingehen kann.

2. Zusammensetzungen gemäß Anspruch 1, **dadurch gekennzeichnet, dass** die ethylenisch ungesättigten Gruppen des Acrylcopolymers (c) Acryloyl- oder Methacryloylgruppen sind, wobei die ethylenisch ungesättigte Gruppe des Monomers (c.2) eine Acryloyl- oder Methacryloylgruppe ist.

3. Zusammensetzungen gemäß einem der Ansprüche 1 oder 2, **dadurch gekennzeichnet, dass** die Di- oder Polycarbonsäure (a.1.2) unter Maleinsäure, Fumarsäure, Isophthalsäure, Phthalsäure, Terephthalsäure, 1,2-Cyclohexandicarbonsäure, 1,3-Cyclohexandicarbonsäure, 1,4-Cyclohexandicarbonsäure, Bernsteinsäure, Glutarsäure, Adipinsäure, Pimelinsäure, Suberinsäure, Azelainsäure, Sebacinsäure, Trimellitsäure, Pyromellitsäure und ihren Anhydriden, allein oder im Gemisch, ausgewählt ist.

4. Zusammensetzungen gemäß einem der Ansprüche 1 bis 3, **dadurch gekennzeichnet, dass** das gesättigte aliphatische Diol mit gerader Kette (a.2.1) unter Ethylenglykol, 1,4-Butandiol, 1,5-Pentandiol und 1,6-Hexandiol ausgewählt ist.

5. Zusammensetzungen gemäß einem der Ansprüche 1 bis 4, **dadurch gekennzeichnet, dass** das aliphatische oder cycloaliphatische Di- oder Polyol (a.2.2) unter 1,4-Cyclohexandiol, 1,4-Cyclohexandimethanol, hydriertem Bisphenol A, Trimethylolpropan, Ditrimethylolpropan, Trimethylolethan, Pentaerythrit und ihren Gemischen ausgewählt ist.

6. Zusammensetzungen gemäß einem der Ansprüche 1 bis 5, **dadurch gekennzeichnet, dass** die gesättigte aliphatische Dicarbonsäure mit gerader Kette (b.1.1) unter Bernsteinsäure, Glutarsäure, Adipinsäure, Pimelinsäure, Suberinsäure, Azelainsäure, Sebacinsäure, 1,12-Dodecandisäure und ihren Anhydriden, allein oder im Gemisch, ausgewählt ist.

7. Zusammensetzungen gemäß einem der Ansprüche 1 bis 6, **dadurch gekennzeichnet, dass** die Di- oder Polycarbonsäure (b.1.2) unter Maleinsäure, Fumarsäure, Phthalsäure, Terephthalsäure, Isophthalsäure, 1,2-Cyclohexandicarbonsäure, 1,3-Cyclohexandicarbonsäure, 1,4-Cyclohexandicarbonsäure, Trimellitsäure, Pyromellitsäure und ihren Anhydriden, allein oder im Gemisch, ausgewählt ist.

**8.** Zusammensetzungen gemäß einem der Ansprüche 1 bis 7, **dadurch gekennzeichnet, dass** das aliphatische oder cycloaliphatische Di- oder Polyol (b.2.2) unter Ethylenglykol, Propylenglykol, 1,4-Butandiol, 1,5-Pentandiol, 1,6-Hexandiol, 1,4-Cyclohexandiol, 1,4-Cyclohexandimethanol, hydriertem Bisphenol A, Trimethylolpropan, Ditrimethylolpropan, Trimethylolethan, Pentaerythrit und ihren Gemischen ausgewählt ist.

**9.** Zusammensetzungen gemäß einem der Ansprüche 1 bis 8, **dadurch gekennzeichnet, dass** besagter semikristalliner Polyester mit Methacryloylendgruppen in einem Grad von 0,17 bis 2,0 Milliäquivalenten Doppelbindungen pro Gramm Polyester endständig ungesättigt ist.

**10.** Zusammensetzungen gemäß einem der Ansprüche 1 bis 9, **dadurch gekennzeichnet, dass** besagter semikristalliner Polyester mit Methacryloylendgruppen ein Zahlenmittel des Molekulargewichts zwischen 1.000 und 20.000 besitzt.

**11.** Zusammensetzungen gemäß einem der Ansprüche 1 bis 10, **dadurch gekennzeichnet, dass** besagter semikristalliner Polyester mit Methacrytoylendgruppen eine Schmelztemperatur von 60 bis 150 °C aufweist.

**12.** Zusammensetzungen gemäß einem der Ansprüche 1 bis 11, **dadurch gekennzeichnet, dass** ein Glycidylmethacrylat unter Glycidylmethacrylat und β-Methylglycidylmethacrylat ausgewählt ist.

**13.** Zusammensetzungen gemäß einem der Ansprüche 1 bis 12, **dadurch gekennzeichnet, dass** das Monomer, das die Acryloyl- oder Methacryloylgruppe enthält (c.1.1), unter Monomeren, wie die Methyl-, Ethyl-, Propyl-, n-Butyl-, Isobutyl-, tert.-Butyl-, 2-Ethylhexyl-, Stearyl-, Tridecyl-, Cyclohexyl-, Benzyl-, Phenyl-, Dimethylaminoethyl-, Diethylaminoethyl-, Isobornyl-, Polysiloxan-, Caprolactonacrylate oder -methacrylate, allein oder im Gemisch, ausgewählt ist.

**14.** Zusammensetzungen gemäß einem der Ansprüche 1 bis 13, **dadurch gekennzeichnet, dass** das ethylenisch ungesättigte Monomer (c.1.2), das sich von dem Monomer (c.1.1) unterscheidet, unter Styren, α-Methylstyren, Vinyltoluen, Acrylnitril, Methacrylnitril, Vinylacetat oder -propionat, Acrylamid, Methacrylamid, Methylolmethacrylamid, Vinylchlorid, Ethylen, Propylen, den Olefinen mit 4 bis 20 Kohlenstoffatomen, allein oder im Gemisch, ausgewählt ist.

**15.** Zusammensetzungen gemäß einem der Ansprüche 1 bis 14, **dadurch gekennzeichnet, dass** das ethylenisch ungesättigte Monomer (c.1.3), das sich von den Monomeren (c.1.1) und (c.1.2) unterscheidet und eine funktionelle Gruppe trägt, die eine Additions- oder Kondensationsreaktion eingehen kann und unter den Gruppen Epoxy, Carboxyl, Hydroxyl oder Isocyanato ausgewählt ist, Glycidylacrylat oder -methacrylat, Acryl- oder Methacrylsäure, Hydroxyethylacrylat oder -methacrylat, 2-Isocyanatoethylmethacrylat, Methacryloylisocyanat, 1-(1-Isocyanato-1-methylethyl)-3-(1-methylethenyl)-benzen, Maleinsäureanhydrid, Tetrahydrophthalsäureanhydrid sein kann.

**16.** Zusammensetzungen gemäß einem der Ansprüche 1 bis 15, **dadurch gekennzeichnet, dass** das Monomer (c.2), das gleichzeitig eine ethylenisch ungesättigte Gruppe und eine funktionelle Gruppe, die eine Additions- oder Kondensationsreaktion mit der von dem Monomer (c.1.3) eingebrachten funktionellen Gruppe des Acrylcopolymers eingehen kann, enthält, unter den Monomeren (c.1.3) ausgewählt ist.

**17.** Zusammensetzungen gemäß einem der Ansprüche 1 bis 16, **dadurch gekennzeichnet, dass** besagtes Acrylcopolymer mit ethylenisch ungesättigten Gruppen in einem Grad von 0,35 bis 3,5 Milliäquivalenten Doppelbindungen pro Gramm Copolymer ungesättigt ist.

**18.** Zusammensetzungen gemäß einem der Ansprüche 1 bis 17, **dadurch gekennzeichnet, dass** das Acrylcopolymer mit ethylenisch ungesättigten Gruppen eine Viskosität von 10.000 bis 100.000 mPa·s bei 125 °C aufweist.

**19.** Zusammensetzungen gemäß einem der Ansprüche 1 bis 18, **dadurch gekennzeichnet, dass** das Acrylcopolymer mit ethylenisch ungesättigten Gruppen ein Zahlenmittel es Molekulargewichts zwischen 1.000 und 8.000 besitzt.

**20.** Zusammensetzungen gemäß einem der Ansprüche 1 bis 19, **dadurch gekennzeichnet, dass** das Acrylcopolymer mit ethylenisch ungesättigten Gruppen eine Glasübergangstemperatur von 45 bis 100 °C aufweist.

**21.** Zusammensetzungen gemäß einem der Ansprüche 1 bis 20, **dadurch gekennzeichnet, dass** das Gemisch aus Polyester und Acrylcopolymer 5 bis 50 Gewichtsteile des semikristallinen Polyesters mit Methacryloylendgruppen und 50 bis 95 Gewichtsteile des Acrylcopolymers mit ethylenisch ungesättigten Gruppen, bezogen auf das Gesamtgewicht dieser beiden Bestandteile, enthält.

**22.** Zusammensetzungen gemäß einem der Ansprüche 1 bis 21, **dadurch gekennzeichnet, dass** sie frei von Vernetzungsmitteln und Katalysatoren sind.

**23.** Zusammensetzungen gemäß einem der Ansprüche 1 bis 22, **dadurch gekennzeichnet, dass** sie außerdem ein ethylenisch ungesättigtes Oligomer umfassen.

**24.** Zusammensetzungen gemäß Anspruch 23, **dadurch gekennzeichnet, dass** sie auf 100 Gewichtsteile bis zu 20 Gewichtsteile des ethylenisch ungesättigten Oligomers umfassen.

**25.** Durch ultraviolette Bestrahlung härtbare Zusammensetzungen gemäß einem der Ansprüche 1 bis 24, **dadurch gekennzeichnet, dass** sie außerdem einen Photoinitiator und gegebenenfalls einen Photoaktivator umfassen.

**26.** Zusammensetzungen gemäß Anspruch 25, **dadurch gekennzeichnet, dass** sie auf 100 Gewichtsteile bis zu 15 Gewichtsteile Photoinitiator umfassen.

**27.** Verfahren zur Beschichtung eines Gegenstands, **dadurch gekennzeichnet, dass** man auf besagten Gegenstand durch Aufbringen durch Sprühen mit der elektrostatischen oder triboelektrischen Pistole oder durch Aufbringen im Fließbett eine strahlungshärtbare pulverförmige Zusammensetzung gemäß einem der Ansprüche 1 bis 26 aufträgt, dadurch, dass man die so erhaltene Beschichtung durch Erhitzen auf eine Temperatur von 100 bis 150 °C über eine Dauer von 1 bis 5 Minuten zum Schmelzen bringt, und dadurch, dass man dann besagte Beschichtung in geschmolzenem Zustand ultravioletten Strahlen oder Bündeln beschleunigter Elektronen über eine Dauer, die ausreichend ist, um eine gehärtete Beschichtung zu bilden, aussetzt.

**28.** Durch Bestrahlung mit einem Bündel beschleunigter Elektronen härtbare pulverförmige Lacke und Farben, die aus Zusammensetzungen gemäß einem der Ansprüche 1 bis 24 erhalten wurden.

**29.** Durch ultraviolette Bestrahlung härtbare pulverförmige Lacke und Farben, die aus Zusammensetzungen gemäß einem der Ansprüche 1 bis 26 erhalten wurden.

**30.** Vollständig oder teilweise mit Lacken und/oder Farben gemäß einem der Ansprüche 27 bis 29 beschichtete Gegenstände.

**Claims**

**1.** Radiation-curing powder compositions, **characterized in that** they comprise a mixture of at least one semicrystalline polyester containing methacryloyl end groups and at least one acrylic copolymer containing ethylenically unsaturated groups, these polyesters comprising the reaction products of a glycidyl methacrylate and a semicrystalline polyester containing carboxyl end groups, the latter being selected from

a) a polyester which is the reaction product of

(1) an acid constituent which contains (a.1.1) 85 to 100 mol% of terephthalic acid, 1,4-cyclohexane-dicarboxylic acid or 1,12-dodecanedioic acid and (a.1.2) 0 to 15 mol% of at least one other aliphatic, cycloaliphatic or aromatic dicarboxylic or polycarboxylic acid having from 4 to 14 carbon atoms, with

(2) an alcohol constituent which contains (a.2.1) 85 to 100 mol% of a linear saturated aliphatic diol having from 2 to 12 carbon atoms and (a.2.2) 0 to 15 mol% of at least one other aliphatic or cycloaliphatic diol or polyol having from 2 to 15 carbon atoms; and

(b) a polyester which is the reaction product of (1) an acid constituent which contains (b.1.1) 85 to 100 mol% of a linear saturated aliphatic dicarboxylic acid having from 4 to 14 carbon atoms and (b.1.2) 0 to 15 mol% of at least one other aliphatic, cycloaliphatic or aromatic dicarboxylic or polycarboxylic acid having from 4 to 14 carbon atoms, with
(2) an alcohol constituent which contains (b.2.1) 85 to 100 mol% of 1,4-cyclohexanediol or 1,4-cyclohexanedimethanol and (b.2.2) 0 to 15 mol% of at least one other aliphatic or cycloaliphatic diol

or polyol having from 2 to 15 carbon atoms, wherein said acrylic copolymer containing ethylenically unsaturated groups consists of
(c) the reaction product of

(1) an acrylic copolymer carrying functional groups which contains (c.1.1) 40 to 95 mol%, calculated relative to all the monomers (c.1.1) and (c.1.2), of at least one monomer containing the acryloyl or methacryloyl group, (c.1.2) 5 to 60 mol%, calculated relative to all the monomers (c.1.1) and (c.1.2), of at least one other ethylenically unsaturated monomer and (c.1.3) 5 to 60 mol%, calculated relative to the total amounts of (c.1.1) and (c.1.2), of another ethylenically unsaturated monomer carrying a functional group capable of undergoing an addition or condensation reaction and selected from epoxy, carboxyl, hydroxyl and isocyanato groups, with
(2) a monomer (c.2) which contains an ethylenically unsaturated group and a functional group capable of undergoing an addition or condensation reaction with the functional group of the monomer (c.1.3) incorporated in the acrylic copolymer (1).

2. Compositions according to Claim 1, **characterized in that** the ethylenically unsaturated groups of the acrylic copolymer (c) are acryloyl or methacryloyl groups, the ethylenically unsaturated group of the monomer (c.2) being an acryloyl or methacryloyl group.

3. Compositions according to Claim 1 or 2, **characterized in that** the dicarboxylic or polycarboxylic acid (a.1.2) is selected from maleic acid, fumaric acid, isophthalic acid, phthalic acid, terephthalic acid, 1,2-cyclohexanedicarboxylic acid, 1,3-cyclohexanedicarboxylic acid, 1,4-cyclohexanedicarboxylic acid, succinic acid, glutaric acid, adipic acid, pimelic acid, suberic acid, azelaic acid, sebacic acid, trimellitic acid, pyromellitic acid and their anhydrides, by themselves or in a mixture.

4. Compositions according to any one, of Claims 1 to 3, **characterized in that** the linear saturated aliphatic diol (a.2.1) is selected from ethylene glycol, 1,4-butanediol, 1,5-pentanediol and 1,6-hexanediol.

5. Compositions according to any one of Claims 1 to 4, **characterized in that** the aliphatic or cycloaliphatic diol or polyol (a.2.2) is selected from 1,4-cyclohexanediol, 1,4-cyclohexanedimethanol, hydrogenated bisphenol A, trimethylolpropane, ditrimethylolpropane, trimethylolethane, pentaerythritol and mixtures thereof.

6. Compositions according to any one of Claims 1 to 5, **characterized in that** the linear saturated aliphatic dicarboxylic acid (b.1.1) is selected from succinic acid, glutaric acid, adipic acid, pimelic acid, suberic acid, azelaic acid, sebacic acid, 1,12-dodecanedioic acid and their anhydrides, by themselves or in a mixture.

7. Compositions according to any one of Claims 1 to 6, **characterized in that** the dicarboxylic or polycarboxylic acid (b.1.2) is selected from maleic acid, fumaric acid, phthalic acid, terephthalic acid, isophthalic acid, 1,2-cyclohexanedicarboxylic acid, 1,3-cyclohexanedicarboxylic acid, 1,4-cyclohexanedicarboxylic acid, trimellitic acid, pyromellitic acid and their anhydrides, by themselves or in a mixture.

8. Compositions according to any one of Claims 1 to 7, **characterized in that** the aliphatic or cycloaliphatic diol or polyol (b.2.2) is selected from ethylene glycol, propylene glycol, 1,4-butanediol, 1,5-pentanediol, 1,6-hexanediol, 1,4-cyclohexanediol, 1,4-cyclohexanedimethanol, hydrogenated bisphenol A, trimethylolpropane, ditrimethylolpropane, trimethylolethane, pentaerythritol and mixtures thereof.

9. Compositions according to any one of Claims 1 to 8, **characterized in that** said semicrystalline polyester containing methacryloyl end groups has a degree of terminal unsaturation of 0.17 to 2.0 milliequivalents of double bonds per gram of polyester.

10. Compositions according to any one of Claims 1 to 9, **characterized in that** said semicrystalline polyester containing methacryloyl end groups has a number-average molecular weight of between 1000 and 20,000.

11. Compositions according to any one of Claims 1 to 10, **characterized in that** said semicrystalline polyester containing methacryloyl end groups has a melting point of 60 to 150°C.

12. Compositions according to any one of Claims 1 to 11, **characterized in that** a glycidyl methacrylate is selected from glycidyl methacrylate and β-methylglycidyl methacrylate.

13. Compositions according to any one of Claims 1 to 12, **characterized in that** the monomer (c.1.1) containing the acryloyl or methacryloyl group is selected from monomers such as the acrylates or methacrylates of methyl, ethyl, propyl, n-butyl, isobutyl, tert-butyl, 2-ethylhexyl, stearyl, tridecyl, cyclohexyl, benzyl, phenyl, dimethylaminoethyl, diethylaminoethyl, isobornyl, polysiloxane and caprolactone, by themselves or in a mixture.

14. Compositions according to any one of Claims 1 to 13, **characterized in that** the ethylenically unsaturated monomer (c.1.2), that differs from the monomer (c.1.1), is selected from styrene, α-methylstyrene, vinyltoluene, acrylonitrile, methacrylonitrile, vinyl acetate or propionate, acrylamide, methacrylamide, methylolmethacrylamide, vinyl chloride, ethylene, propylene and olefins having from 4 to 20 carbon atoms, by themselves or in a mixture.

15. Compositions according to any one of Claims 1 to 14, **characterized in that** the ethylenically unsaturated monomer (c.1.3), that differs from the monomers (c.1.1) and (c.1.2), carries a functional group capable of undergoing an addition or condensation reaction and is selected from epoxy, carboxyl, hydroxyl and isocyanato groups, can be glycidyl acrylate or methacrylate, acrylic or methacrylic acid, hydroxyethyl acrylate or methacrylate, 2-isocyanatoethyl methacrylate, methacryloyl isocyanate, 1-(1-isocyanato-1-methylethyl)-3-(1-methylethenyl)benzene, maleic anhydride or tetrahydrophthalic anhydride.

16. Compositions according to any one of Claims 1 to 15, **characterized in that** the monomer (c.2), which contains both an ethylenically unsaturated group and a functional group capable of undergoing an addition or condensation reaction with the functional group of the acrylic copolymer introduced by the monomer (c.1.3), is selected from the monomers (c.1.3).

17. Compositions according to any one of Claims 1 to 16, **characterized in that** said acrylic copolymer containing ethylenically unsaturated groups has a degree of unsaturation of 0.35 to 3.5 milliequivalents of double bonds per gram of copolymer.

18. Compositions according to any one of Claims 1 to 17, **characterized in that** the acrylic copolymer containing ethylenically unsaturated groups has a viscosity ranging from 10,000 to 100,000 mPa.s at 125°C.

19. Compositions according to any one of Claims 1 to 18, **characterized in that** the acrylic copolymer containing ethylenically unsaturated groups has a number-average molecular weight of between 1000 and 8000.

20. Compositions according to any one of Claims 1 to 19, **characterized in that** the acrylic copolymer containing ethylenically unsaturated groups has a glass transition temperature ranging from 45 to 100°C.

21. Compositions according to any one of Claims 1 to 20, **characterized in that** the mixture of polyester and acrylic copolymer contains 5 to 50 parts by weight of semicrystalline polyester containing methacryloyl end groups and 50 to 95 parts by weight of acrylic copolymer containing ethylenically unsaturated groups, based on the total weight of these two constituents.

22. Compositions according to any one of Claims 1 to 21, **characterized in that** they are free of crosslinking agents and catalysts.

23. Compositions according to any one of Claims 1 to 22, **characterized in that** they also comprise an ethylenically unsaturated oligomer.

24. Compositions according to Claim 23, **characterized in that** they comprise up to 20 parts by weight of ethylenically unsaturated oligomer per 100 parts by weight.

25. Compositions curable by ultraviolet irradiation according to any one of Claims 1 to 24, **characterized in that** they also comprise a photoinitiator and optionally a photoactivator.

26. Compositions according to Claim 25, **characterized in that** they comprise up to 15 parts by weight of photoinitiator

27. Process for the coating of an article, **characterized in that** a radiation-curing powder composition according to any one of Claims 1 to 26 is applied to said article by spray deposition with an electrostatic or triboelectric gun or by deposition in a fluidized bed, **in that** the resulting coating is melted by heating at a temperature of 100 to 150°C for a period of 1 to 5 minutes, and **in that** said molten coating is then exposed to ultraviolet rays or accelerated electron beams for a sufficient time to form a cured coating.

28. Powder varnishes and paints curable by irradiation with an accelerated electron beam, obtained from compositions according to any one of Claims 1 to 24.

29. Powder varnishes and paints curable by ultraviolet irradiation, obtained from compositions according to any one of Claims 1 to 26.

30. Articles wholly or partially coated with varnishes and/or paints according to any one of Claims 27 to 29.